(19) **Europäisches Patentamt**
**European Patent Office**
**Office européen des brevets**

(11) **EP 4 600 076 A1**

(12) **EUROPÄISCHE PATENTANMELDUNG**

(43) Veröffentlichungstag:
**13.08.2025 Patentblatt 2025/33**

(21) Anmeldenummer: **25155937.3**

(22) Anmeldetag: **05.02.2025**

(51) Internationale Patentklassifikation (IPC):
**B60L 53/12** (2019.01)   **H01F 38/14** (2006.01)
**H02J 50/10** (2016.01)   **H01Q 3/30** (2006.01)
**H01Q 7/00** (2006.01)   **B60L 53/126** (2019.01)
**B60L 53/38** (2019.01)

(52) Gemeinsame Patentklassifikation (CPC):
**B60L 53/126; B60L 53/38; H01F 38/14; H01Q 3/30;
H01Q 7/00; H02J 50/10**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **06.02.2024 DE 102024103271**

(71) Anmelder: **Universität Stuttgart Körperschaft des
Öffentlichen Rechts
70174 Stuttgart (DE)**

(72) Erfinder:
• **Götz, Tobias Daniel
70191 Stuttgart (DE)**
• **Parspour, Nejila
70839 Gerlingen (DE)**

(74) Vertreter: **Müller-Boré & Partner
Patentanwälte PartG mbB
Friedenheimer Brücke 21
80639 München (DE)**

(54) **VERFAHREN UND SYSTEM ZUR INDUKTIVEN ÜBERTRAGUNG ELEKTRISCHER ENERGIE,
SOWIE VERFAHREN ZUR HERSTELLUNG EINES INDUKTIVEN
ENERGIEÜBERTRAGUNGSSYSTEMS**

(57)   Die Erfindung betrifft ein Verfahren zur induktiven Übertragung elektrischer Energie von einer Sendereinheit (10) auf eine Empfängereinheit (20) eines induktiven Energieübertragungssystems (100), umfassend:
- Erzeugen einer stehenden Welle eines für die induktive Energieübertragung genutzten Magnetfeldes mittels einer mehrphasigen Senderwicklung der Sendereinheit (10), wobei die stehende Welle auf eine Relativposition der Senderwicklung und einer Empfängerwicklung der Empfängereinheit (20) angepasst wird. Ferner betrifft die Erfindung ein Sendersystem für eine induktive Übertragung elektrischer Energie, ein induktives Energieübertragungssystem (100; 200), sowie ein Verfahren zur Herstellung eines induktiven Energieübertragungssystems (100; 200).

Fig. 8b

EP 4 600 076 A1

## Beschreibung

Die Erfindung betrifft ein Verfahren zur induktiven Übertragung elektrischer Energie. Ferner betrifft die Erfindung ein induktives Energieübertragungssystem sowie ein Verfahren zur Herstellung eines induktiven Energieübertragungssystems.

Induktive Energieübertragungssysteme bzw. Ladesysteme basieren prinzipbedingt auf einer magnetischen Flussverkopplung von Übertragungsspulen einer Sender- und Empfängereinheit des Energieübertragungssystems. Dies erfordert somit eine Mindestgenauigkeit bei der Positionierung der Übertragungsspulen. So ist z.B. im Automotive-Bereich bei leichten elektrischen Nutzfahrzeugen ("Light-Duty EV") mit einer Ladeleistung größer als 3,3 kW nach geltender Standardisierung (SAE J2954) eine Positioniertoleranz von +75 mm in Fahrtrichtung und +100 mm quer zur Fahrrichtung zulässig. Um diese Positioniertoleranz z.B. beim Einparken eines Elektrofahrzeugs in den Ladebereich einer induktiven Ladestation einzuhalten, werden aktuell verschiedene Ansätze für Assistenzsysteme bzw. für eine zusätzliche Sensorik zur Unterstützung bei der Ausrichtung der Übertragungsspulen von verschiedenen Unternehmen und Institutionen diskutiert. Zudem müssen beim elektrischen Laden maximal zulässige Betriebsgrenzen eingehalten werden. So dürfen z.B. beim induktiven Laden bestimmte magnetische Grenzwerte nicht überschritten werden. Um dies zu gewährleisten kann bei Ladesystemen mit einer geringen Ladeleistung (in der Größenordnung < 100 W) die Übertragungsleistung reduziert werden, was als "Power Derating" bezeichnet wird. Bei Ladeleistungen > 100 W wird eine Leistungs- und/oder Wirkungsgradminderung aus Kosten- und Effizienzgründen jedoch in der Regel nicht akzeptiert bzw. toleriert.

Aufgrund des aktuellen Reifegrads in Forschung & Entwicklung kommen bisher in erster Linie einphasige induktive Ladesysteme zum Einsatz. Bei einphasigen Ladesystemen wird ein ortsfestes Magnetfeld zur Energieübertragung genutzt. Aufgrund der Ortsfestigkeit des Magnetfelds ist die Übertragungseffizienz bei einphasigen induktiven Ladesystemen stark von der relativen Positionierung der Übertragungsspulen abhängig. Somit sind bei einphasigen induktiven Ladesystemen in der Regel Assistenzsysteme erforderlich, um eine möglichst genaue Positionierung der Übertragungsspulen zu gewährleisten. Assistenzsysteme zur Positionierung der Spulen tragen jedoch nicht zur Energieübertragung selbst bei und erhöhen die Kosten sowie die Systemanfälligkeit.

Mehrphasige induktive Übertragungskonzepte befinden sind technologisch noch im Frühstadium und basieren bisher auf sogenannten Wanderwellen. Zwar ist die Positioniertoleranz bei einer dreiphasigen induktiven Übertragung auf Basis von Wanderwellen höher als bei einer einphasigen induktiven Übertragung, jedoch haben Wanderwellen den entscheidenden Nachteil, dass in bestimmten Bereichen auf der Empfängerseite des Energieübertragungssystems hohe lokale Verluste auftreten und/oder magnetische Grenzwerte überschritten werden können.

Es ist daher eine Aufgabe der vorliegenden Erfindung, eine verbesserte kontaktlose bzw. induktive Übertragung elektrischer Energie, insbesondere für Elektrofahrzeuge, bereitzustellen. Insbesondere ist es eine Aufgabe der Erfindung, einen weitgehend konstanten Koppelfaktor zwischen den Übertragungswicklungen der Sender- und Empfängereinheit eines induktiven Energieübertragungssystems für eine praktikable bzw. realitätsnahe Positioniergenauigkeit der Empfängereinheit zu ermöglichen. Gerade bei Elektrofahrzeugen (aber auch anderen mobilen Anwendungen) ist es wünschenswert, dass der Koppelfaktor, zumindest in einem bestimmten Positionierbereich, eine möglichst geringe Sensitivität gegenüber einer Änderung der Relativposition der Übertragungswicklungen eines induktiven Energieübertragungssystems aufweist. Ferner ist es wünschenswert, dass zur Positionierung der Empfängereinheit auf eine zusätzliche assistive Sensorik, welche teuer und fehleranfällig ist, verzichtet werden kann.

Die oben genannte Aufgabe wird durch die Gegenstände der nebengeordneten Ansprüche gelöst. Vorteilhafte Ausführungsformen sind Gegenstand der Unteransprüche.

Ein erster unabhängiger Aspekt zur Lösung der Aufgabe betrifft ein Verfahren zur induktiven Übertragung elektrischer Energie von einer Sendereinheit auf eine Empfängereinheit eines induktiven Energieübertragungssystems, umfassend:

- Erzeugen einer, insbesondere beweglichen und/oder feldorientierbaren bzw. feldorientierten, stehenden Welle eines für die induktive Energieübertragung genutzten Magnetfeldes mittels einer mehrphasigen Senderwicklung der Sendereinheit, wobei die stehende Welle auf eine Relativposition der Senderwicklung und einer Empfängerwicklung der Empfängereinheit, insbesondere dynamisch, angepasst (bzw. abgestimmt) wird.

Die Sendereinheit (Sender) ist auf einer Senderseite bzw. Primärseite des Energieübertragungssystems angeordnet und umfasst im Wesentlichen eine Senderwicklung bzw. Senderspule. Die Senderwicklung bzw. Senderspule wird im Rahmen dieser Beschreibung auch als Primärwicklung bzw. Primärspule bezeichnet. Es versteht sich, dass die Senderseite bzw. Empfängerseite aber jeweils auch noch weitere Elemente, wie z.B. einen Leistungsinverter, eine Kompensationsschaltung bzw. ein Kompensationsnetzwerk und/oder eine Signalelektronik, umfassen kann.

Die stehende Welle eines für die induktive Energieübertragung genutzten Magnetfelds (bzw. einer für die Energieübertragung genutzte Magnetfeldkomponente) ist insbesondere eine bewegliche und/oder feldorientierbare bzw. feldorientierte stehende Welle. Dabei wird unter einer "beweglichen" stehenden Welle im Rahmen dieser Beschreibung verstanden, dass die stehende Welle, insbesondere in eine laterale Richtung (d.h. senkrecht zur Magnetfeldrichtung, welches für die induktive Energieübertragung genutzt wird), bewegt bzw. verschoben werden kann. Die bewegliche stehende Welle unterscheidet sich grundlegend von einer Wanderwelle. Während sich die Wanderwelle über die Zeit naturgemäß verschiebt, ist die bewegliche stehende Welle ohne eine explizite Änderung von Parametern (insbesondere elektrischen Strömen, die an einer Wicklung bzw. Spule, durch welche die bewegliche stehende Welle erzeugt wird, anliegen) über die Zeit örtlich konstant (so dass sich feste Orte maximaler und minimaler Flussdichte des magnetischen Feldes ausbilden). Eine Wanderwelle ist definitionsgemäß keine stehende Welle. Unter einer feldorientierten stehenden Welle wird im Rahmen dieser Beschreibung verstanden, dass die stehende Welle auf eine Position der Empfängereinheit bzw. der Empfängerwicklung orientiert bzw. ausgerichtet ist. Insbesondere resultiert aus dem Anpassen der erzeugten stehenden Welle eine feldorientierte stehenden Welle. Unter einer feldorientierbaren stehenden Welle wird im Rahmen dieser Beschreibung verstanden, dass die stehende Welle auf eine Position der Empfängereinheit bzw. der Empfängerwicklung orientierbar bzw. ausrichtbar ist.

Der Begriff "mehrphasige Sender- bzw. Empfängerwicklung" umfasst im Rahmen dieser Beschreibung insbesondere eine mehrphasige Wicklungsanordnung und/oder ein mehrphasiges Wicklungssystem. Der Begriff "mehrphasige Sender- bzw. Empfängerwicklung" bezieht sich im Sinne dieser Beschreibung also insbesondere auf mehrere Wicklungen, die in einer bestimmten Weise zueinander angeordnet sind und/oder ein zusammengehöriges System mit mehreren Phasen bzw. Strängen bilden. Die Begriffe "Phase" und "Strang" werden, sofern sie sich auf eine Wicklung (bzw. eine Wicklungsanordnung und/oder ein Wicklungssystem) beziehen, synonym verwendet. Beispielsweise ist die mehrphasige Sender- bzw. Empfängerwicklung eine dreiphasige Sender- bzw. Empfängerwicklung.

Das Verfahren kann insbesondere ein Bereitstellen eines induktiven Energieübertragungssystems zum Übertragen elektrischer Energie von einer Sendereinheit (Primärseite) auf eine Empfängereinheit (Sekundärseite) des Energieübertragungssystems umfassen. Ferner kann das Verfahren auch den folgenden Schritt umfassen:

- Anpassen bzw. Optimieren, insbesondere Ausrichten und/oder Verschieben, der stehenden Welle bezüglich einer Position der Empfängereinheit (bzw. Empfängerwicklung) und/oder bezüglich einer Relativposition der Sendereinheit (bzw. Senderwicklung) und Empfängereinheit (bzw. Empfängerwicklung) des Energieübertragungssystems.

Die vorliegende Erfindung ermöglicht, beispielsweise beim induktiven Laden von Elektrofahrzeugen, eine drastische Erhöhung der lateralen Positioniertoleranz, so dass vorteilhafterweise auf ein Assistenzsystem zur Feinpositionierung der Übertragungswicklungen bzw. Spulen verzichtet werden kann. Somit ermöglicht die Erfindung insbesondere einen weitgehend konstanten Koppelfaktor zwischen den Übertragungswicklungen der Sender- und Empfängereinheit eines induktiven Energieübertragungssystems für eine praktikable bzw. realitätsnahe Positioniergenauigkeit der Empfängereinheit. Insbesondere durch das Erzeugen und Anpassen einer (beweglichen und/oder feldorientierbaren) stehenden Welle des zur Energieübertragung genutzten Magnetfelds kann vorteilhafterweise erreicht werden, dass der Koppelfaktor, zumindest in einem bestimmten Positionierbereich, eine vergleichsweise geringe Sensitivität gegenüber einer Änderung der Relativposition der Übertragungswicklungen aufweist.

Insbesondere ist die stehende Welle eine bewegliche stehende Welle. Alternativ oder zusätzlich ist eine (räumliche) Position der stehenden Welle, insbesondere bezüglich bzw. relativ zu einer Position der Empfängereinheit, (dynamisch) einstellbar. Insbesondere ist eine Position der stehenden Welle, insbesondere bezüglich bzw. relativ zu einer Position der Empfängereinheit über eine Ansteuerung und/oder Modulation von Strangströmen, welche an der mehrphasigen Senderwicklung anliegen, einstellbar. Unter der "Position der stehenden Welle" wird insbesondere zumindest eine Position zumindest eines Knotenpunktes und/oder eine Position eines Raumzeigers der stehenden Welle verstanden. Insbesondere lässt sich durch eine Amplitudenmodulation der Strangströme eine Ausrichtung der stehenden Magnetfeldwelle, d.h. insbesondere eine Position der Knoten und/oder der Berge bzw. Täler auf die Position der Empfängereinheit bzw. Empfängerwicklung einstellen. Insbesondere darauf basiert die "Beweglichkeit" der stehenden Magnetfeldwelle.

Insbesondere wird eine bewegliche und/oder feldorientierbare stehende Welle mittels einer mehrphasigen Senderwicklung erzeugt, die an die Position des Empfängers angepasst werden kann. Mit Hilfe der beweglichen und/oder feldorientierbaren stehenden Welle kann insbesondere der Kopplungsfaktor für ein energieeffizientes induktives Energieübertragungssystem bzw. Ladesystem optimiert werden. Die stehende Welle des Magnetfelds resultiert insbesondere aus einer örtlichen Überlagerung der magnetischen Flussdichte in der Umgebung der Übertragungsspule bzw. Senderspule. Sie ist insbesondere charakterisiert durch Orte, an denen die magnetische Flussdichte minimal ist (Knoten) oder maximal ist (Berge/Täler). Die geometrische Dimensionierung der mehrphasigen Senderwicklung (auch als mehrsträngige Senderwicklung bezeichnet) basiert insbesondere auf dem Abstand der Knotenpunkte der beweglichen bzw. einstellbaren stehenden Magnetwelle. Die geometrische Dimensionierung der Empfängerspule bzw. Empfängerwicklung basiert idealerweise auf dem Knotenabstand der von der mehrphasigen Senderwicklung erzeugten stehenden Magnetwelle.

Insbesondere dient die mehrphasige Senderwicklung zur Erzeugung konsistenter Magnetfelder der stehenden magnetischen Welle, insbesondere durch eine Überlagerung der magnetischen Flussdichte basierend auf Strömen in den Phasen/Strängen der mehrphasigen/mehrsträngigen Senderwicklung.

Insbesondere umfasst die Sendereinheit eine Drei-Phasen-Senderwicklung, während die Empfängereinheit eine Ein- oder Mehrphasen-Empfängerwicklung, insbesondere mit einer D-förmigen Konfiguration, umfasst.

Die vorliegende Erfindung kann insbesondere im Bereich des induktiven Ladens angewandt werden. Beispielsweise ist die Erfindung für Elektrofahrzeuge geeignet. Dabei ist die Erfindung z.B. auch für Fälle geeignet, bei denen eine seitliche Fehlanpassung auftritt, wodurch praktische und weniger empfindliche Ausrichtungsanforderungen beim Laden möglich sind. Die Erfindung bietet insbesondere eine höhere seitliche Positionierungstoleranz und Anpassungsfähigkeit beim induktiven Laden. Vorteilhafterweise können z.B. zusätzliche Assistenzsensoren vermieden werden. Insbesondere durch eine Anpassung bzw. Manipulation der stehenden Magnetfeldwelle kann eine optimale Positionierung erreicht werden. Insbesondere lässt die Erfindung vorteilhafterweise einen höheren Ausrichtungsversatz bzw. eine höhere Positionierungstoleranz der Übertragungsspulen eines Energieübertragungssystems (ohne die Verwendung einer zusätzlichen Sensorik) zu. Somit kann insbesondere die Effizienz und Benutzerfreundlichkeit eines Ladeprozesses erheblich verbessert werden. Insbesondere durch eine (dynamische) Anpassung der stehenden Magnetfeldwelle kann die Effizienz der Energieübertragung (dynamisch) maximiert werden. Auf diese Weise ist die Energieübertragung weitgehend unabhängig von der genauen Position des Empfängers. Insbesondere bietet die flexible Feldanpassung eine verbesserte Effizienz und eine erweiterte Anwendbarkeit für mobile Ladeszenarien, insbesondere für Elektrofahrzeuge.

In einer bevorzugten Ausführungsform wird zum Erzeugen der stehenden Welle jedem einer Mehrzahl von Strängen der mehrphasigen Senderwicklung ein jeweils zugehöriger Strangstrom aufgeprägt, wobei sämtliche Strangströme die gleiche elektrische Phase aufweisen. Mit anderen Worten sind sämtliche Strangströme, welche durch die mehrphasige Senderwicklung fließen, phasengleich. Insbesondere sind auch sämtliche Spannungen bzw. Strangspannungen, welche an den jeweiligen Strängen der mehrphasigen Senderwicklung (zum Erzeugen der entsprechenden Strangströme) anliegen bzw. angelegt werden, phasengleich. Bei einer N-phasigen Senderwicklung werden entsprechend $N$ phasengleiche Strangströme an die $N$ Phasen bzw. Stränge angelegt. Dabei bezeichnet $N$ eine ganze Zahl größer 1. Insbesondere ist die Senderwicklung dreiphasig und somit $N = 3$.

Für den Strom $i_n$ (t), welcher dem n-ten Strang der mehrphasigen Senderwicklung aufgeprägt ist bzw. wird, gilt insbesondere:

$$i_n(t) = \hat{\imath}_n \sin(\omega t) \ \forall n \in \mathcal{N}_{Phase} \qquad (1).$$

Dabei bezeichnet $\mathcal{N}_{Phase}$ die Menge von vorhandenen Phasen bzw. Strängen. Für die Gesamtzahl $N$ an vorhandenen Strängen gilt: $N = \max \mathcal{N}_{Phase}$. Ferner bezeichnet $\hat{\imath}_n$ eine Amplitude des n-ten Strangstroms $i_n$ (t), $\omega$ eine Frequenz bzw. Kreisfrequenz und $t$ die Zeit. Beispielsweise gilt im Falle einer dreiphasigen Wicklung mit $N = 3$ für einen ersten Strang a, einen zweiten Strang b und einen dritten Strang c:

$$i_a(t) = \hat{\imath}_a \sin(\omega t) \qquad (2)$$

$$i_b(t) = \hat{\imath}_b \sin(\omega t) \qquad (3)$$

$$i_c(t) = \hat{\imath}_c \sin(\omega t) \qquad (4).$$

Dabei bezeichnet $\hat{\imath}_a$ eine Amplitude des Strangstroms $i_a$ (t), $\hat{\imath}_b$ eine Amplitude des Strangstroms $i_b$ (t), $\hat{\imath}_c$ eine Amplitude des Strangstroms $i_c$ (t), $\omega$ eine Frequenz bzw. Kreisfrequenz und t die Zeit.

In einer weiteren bevorzugten Ausführungsform wird die stehende Welle dadurch angepasst (und/oder optimiert), dass Amplituden phasengleicher Strangströme, welche an (zugehörigen Phasen bzw. Strängen) der mehrphasigen Senderwicklung anliegen, angepasst bzw. eingestellt werden. Mit anderen Worten umfasst das Anpassen (und/oder Optimieren) der stehenden Welle ein Anpassen von Amplituden phasengleicher Strangströme, welche an (zugehörigen Phasen bzw. Strängen) der mehrphasigen Senderwicklung anliegen.

In einer weiteren bevorzugten Ausführungsform werden die Amplituden der phasengleichen Strangströme derart angepasst (bzw. eingestellt), dass eine Kopplung (bzw. ein Koppelfaktor) zwischen der Sendereinheit (bzw. der Senderwicklung) und der Empfängereinheit (bzw. der Empfängerwicklung) maximal ist. Mit anderen Worten umfasst das Anpassen der stehenden Welle ein Ermitteln (insbesondere Messen) einer Kopplung bzw. eines Kopplungsmaximums zwischen der Sendereinheit (bzw. Senderwicklung) und der Empfängereinheit (bzw. Empfängerwicklung). Das Ermitteln einer Kopplung zwischen der Sendereinheit (bzw. Senderwicklung) und der Empfängereinheit (bzw. Empfängerwicklung) kann z.B. über das Impedanz- und/oder Leistungsverhalten der Sendereinheit bzw. Senderwicklung erfolgen. Vorzugsweise erfolgt die Einstellung der Strangströme bzw. die Anpassung der Strangstromamplituden durch einen Scan- bzw. Suchvorgang, bei dem schrittweise für verschiedene Ausrichtungen der beweglichen stehenden Welle eine Systemantwort, also z.B. die von der Primärseite eingespeiste Leistung, ausgewertet wird. Insbesondere umfasst das Anpassen der Strangstromamplituden ein (schrittweises oder kontinuierliches) Ändern bzw. "Sweepen" der Strangstromamplituden und/oder ein Detektieren (insbesondere Messen) einer Systemantwort des induktiven Energieübertragungssystems (bzw. der Sender- und/oder Empfängereinheit des induktiven Energieübertragungssystems). Alternativ oder zusätzlich umfasst das Anpassen der Strangstromamplituden insbesondere ein Auswerten der Systemantwort. Die Systemantwort kann z.B. eine Impedanz- und/oder eine Leistung (bzw. ein Impedanz- und/oder Leistungsverhalten) umfassen. Wird die Systemantwort auf der Senderseite bzw. mittels der Sendereinheit ermittelt, so ist eine Kommunikation mit der Empfängereinheit bzw. Empfängerwicklung nicht erforderlich. Das Ermitteln einer Kopplung zwischen der Sendereinheit und der Empfängereinheit kann somit ausschließlich auf der Senderseite bzw. ausschließlich mittels der Sendereinheit (d.h. unabhängig von der Empfängerseite bzw. der Empfängereinheit) erfolgen. Insbesondere ist hierzu keine explizite Kenntnis der Relativposition der Sender- und Empfängereinheit erforderlich.

In einer weiteren bevorzugten Ausführungsform umfasst das Verfahren ein Bereitstellen des induktiven Energieübertragungssystems, wobei eine Dimension bzw. eine Gesamtlänge der mehrphasigen Senderwicklung des Energieübertragungssystems im Wesentlichen einer Periodenlänge der zur Energieübertragung erzeugten stehenden Magnetfeldwelle entspricht. Mit anderen Worten ist bzw. wird eine Gesamtlänge der mehrphasigen Senderwicklung des Energieübertragungssystems auf eine Periodenlänge der zur Energieübertragung erzeugten stehenden Magnetfeldwelle abgestimmt. Mit anderen Worten ist bzw. wird eine Gesamtlänge der mehrphasigen Senderwicklung des Energieübertragungssystems auf Basis einer Periodenlänge der zur Energieübertragung erzeugten stehenden Magnetfeldwelle dimensioniert. Alternativ oder zusätzlich entspricht eine Dimension bzw. eine Gesamtlänge der Empfängerwicklung des Energieübertragungssystems im Wesentlichen einer Periodenlänge einer Grund- oder Oberwelle des zur Energieübertragung genutzten Magnetfelds. Mit anderen Worten ist bzw. wird eine Gesamtlänge der Empfängerwicklung des Energieübertragungssystems auf eine Periodenlänge einer Grund- oder Oberwelle des zur Energieübertragung genutzten Magnetfelds abgestimmt. Mit anderen Worten ist bzw. wird eine Gesamtlänge der Empfängerwicklung des Energieübertragungssystems auf Basis einer Periodenlänge einer Grund- oder Oberwelle des zur Energieübertragung genutzten Magnetfelds dimensioniert.

Insbesondere hat sich im Rahmen der vorliegenden Erfindung herausgestellt, dass mit einer geschickten geometrischen Dimensionierung (Abstimmung) der Übertragungswicklungen auf Basis der Periodenlänge einer Grund- oder Oberwelle des zur Energieübertragung genutzten Magnetfelds die magnetische Flussverkopplung zwischen Sender- und Empfängerseite erhöht bzw. maximiert werden kann. Insbesondere hat sich herausgestellt, dass sich für die Abstimmung nicht nur die Periodenlänge $\lambda$ der Grundwelle des zur Energieübertragung genutzten Magnetfelds eignet, sondern auch die Periodenlänge einer entsprechenden Oberwelle (wie z.B. die Periodenlänge $\lambda_2 = \lambda/2$ der zweiten Harmonischen, die Periodenlänge $\lambda_3 = \lambda/3$ der dritten Harmonischen, die Periodenlänge $\lambda_4 = \lambda/4$ der vierten Harmonischen, etc., des zur Energieübertragung genutzten Magnetfelds). Beispielsweise kann die Gesamtlänge der Sender- und/oder Empfängerwicklung im Wesentlichen der Periodenlänge $\lambda$ der Grundwelle des zur Energieübertragung genutzten Magnetfelds entsprechen. Alternativ kann die Gesamtlänge der Empfängerwicklung im Wesentlichen der Periodenlänge $\lambda_2 = \lambda/2$ der zweiten Harmonischen, der Periodenlänge $\lambda_3 = \lambda/3$ der dritten Harmonischen, der Periodenlänge $\lambda_4 = \lambda/4$ der vierten Harmonischen, etc., des zur Energieübertragung genutzten Magnetfelds entsprechen. Im Rahmen der vorliegenden Erfindung hat sich herausgestellt, dass mit einer derartigen Dimensionierung der Sendereinheit bzw. der Senderwicklung die magnetische Flussverkopplung zwischen Sender- und Empfängerseite erhöht bzw. maximiert werden kann.

Der Begriff "im Wesentlichen" bedeutet im Rahmen der vorliegenden Beschreibung hinsichtlich einer angegebenen Dimension (z.B. Größen- oder Längenangabe) insbesondere, dass eine tatsächliche Dimension (z.B. Größe oder Länge) von der angegebenen Dimension (Größe- oder Länge) im Rahmen von üblichen Fertigungstoleranzen abweichen kann. Beispielsweise kann "im Wesentlichen" bedeuten, dass eine tatsächliche Dimension (z.B. Größe oder Länge) von der angegebenen Dimension (Größe- oder Länge) um weniger als 10%, vorzugsweise um weniger als 5% und besonders bevorzugt um weniger als 3% abweicht.

In einer weiteren bevorzugten Ausführungsform umfasst das Verfahren ein Bereitstellen des induktiven Energieübertragungssystems, wobei die Empfängerwicklung eine oder mehrere (insbesondere mäanderförmig angeordnete bzw. aneinandergereihte) Windungen mit jeweils einem Windungsdurchmesser, der im Wesentlichen der halben Periodenlänge einer Grund- oder Oberwelle des zur Energieübertragung genutzten Magnetfelds entspricht, aufweist. Beispielsweise kann der Windungsdurchmesser im Wesentlichen der halben Periodenlänge $\lambda/2$ der Grundwelle des zur Energieübertragung genutzten Magnetfelds entsprechen. Alternativ kann der Windungsdurchmesser im Wesentlichen der halben Periodenlänge $\lambda_2/2 = \lambda/4$ der zweiten Harmonischen, der halben Periodenlänge $\lambda_3/2 = \lambda/6$ der dritten Harmonischen, der halben Periodenlänge $\lambda_4/4 = \lambda/8$ der vierten Harmonischen, etc., des zur Energieübertragung genutzten Magnetfelds entsprechen. Im Rahmen der vorliegenden Erfindung hat sich herausgestellt, dass mit einer derartigen Dimensionierung der Empfängereinheit bzw. der Empfängerwicklung die magnetische Flussverkopplung zwischen Sender- und Empfängerseite erhöht bzw. maximiert werden kann.

Unter einem "Windungsdurchmesser" wird im Rahmen der vorliegenden Beschreibung insbesondere ein Mittelwert eines inneren und äußeren Windungsdurchmessers verstanden. Bei einer Windung kann es sich um eine kreisförmige bzw. spiralförmige Windung (d.h. um eine Windung mit einem kreisförmigen Querschnitt), oder auch z.B. um eine rechteckförmige Windung (d.h. um eine Windung mit einem rechteckförmigen Querschnitt) handeln. Dabei wird unter dem "Windungsdurchmesser" einer kreisförmigen Windung im Rahmen der vorliegenden Beschreibung insbesondere der Durchmesser eines durch die Windung (in einer Draufsicht) aufgespannten Kreises verstanden. Unter dem "Windungsdurchmesser" einer rechteckförmigen Windung wird im Rahmen dieser Beschreibung insbesondere ein (kleinster und/oder größter) Abstand von (näherungsweise) gegenüberliegenden Seiten eines durch die Windung (in einer Draufsicht) aufgespannten Rechtecks bzw. ein (kleinster und/oder größter) Abstand von (näherungsweise) gegenüberliegenden (im Wesentlichen parallelen) Leitern bzw. Leiterabschnitten der Windung verstanden. Unter dem "Windungsdurchmesser" wird im Rahmen der vorliegenden Beschreibung kein Drahtdurchmesser verstanden.

In einer weiteren bevorzugten Ausführungsform umfasst das Verfahren ein Bereitstellen des induktiven Energieübertragungssystems, wobei die Senderwicklung eine dreiphasige Wicklung ist, und wobei die Empfängerwicklung eine einphasige Wicklung, insbesondere eine einphasige DDD-Wicklung, ist. Vorzugsweise ist die Empfängerwicklung mäanderförmig ausgebildet. Insbesondere umfasst die Empfängerwicklung zumindest eine, insbesondere mehrere und vorzugsweise mehr als drei mäanderförmig bzw. D-förmig aneinandergereihte Windungen. Mit anderen Worten weist die Empfängerwicklung vorzugsweise eine D-förmige Windungskonfiguration bzw. Windungsanordnung auf. Beispielsweise kann die Empfängerwicklung eine sogenannte D-Wicklung oder eine DD-Wicklung umfassen bzw. sein. Vorzugsweise umfasst oder ist die Empfängerwicklung eine DDD- oder DDDD-Wicklung. Insbesondere im Zusammenspiel mit der mehr- bzw. dreiphasigen Primärseite hat sich im Rahmen der vorliegenden Erfindung herausgestellt, dass auf diese Weise das erzeugte Magnetfeld wesentlich stärker zur Energieübertragung ausgenutzt werden kann als bei gängigen zirkularen Wicklungen oder DD-Wicklungen.

Ein weiterer unabhängiger Aspekt zur Lösung der Aufgabe betrifft ein induktives Energieübertragungssystem umfassend:

- eine Sendereinheit mit einer mehrphasigen Senderwicklung, welche ausgelegt ist, eine stehende Welle eines für die induktive Energieübertragung genutzten Magnetfeldes zu erzeugen;
- eine Empfängereinheit mit einer einphasigen oder mehrphasigen Empfängerwicklung; und
- eine Anpassungseinheit, welche ausgelegt ist, die stehende Welle auf eine Relativposition der Senderwicklung und der Empfängerwicklung anzupassen.

Insbesondere ist das kontaktlose bzw. induktive Energieübertragungssystem ein System zum Übertragen von elektrischer Energie von der Sender- bzw. Primärseite auf die Empfänger- bzw. Sekundärseite. Mit anderen Worten ist das Energieübertragungssystem ein System zum Umwandeln von elektrischer Energie (auf der Senderseite) in elektrische Energie (auf der Empfängerseite). Die Empfängereinheit ist insbesondere ausgelegt, um eine induzierte Spannung und/oder einen induzierten Strom auf Basis des von der Sendereinheit erzeugten Magnetfelds zu erzeugen. Insbesondere umfasst die Anpassungseinheit eine oder mehrere Stromquellen zum Anlegen von (phasengleichen) Strangströmen an die Phasen bzw. Stränge der mehrphasigen Senderwicklung. Insbesondere umfasst die Anpassungseinheit eine Messeinheit zum Ermitteln einer Kopplung zwischen der Sendereinheit und der Empfängereinheit. Insbesondere umfasst die Anpassungseinheit einen Prozessor bzw. Mikroprozessor zum Steuern der Stromquelle(n), wobei der Prozessor bzw. Mikroprozessor ausgelegt ist, die Amplituden der an die mehrphasige Senderwicklung aufgeprägten Strangströme derart anzupassen bzw. einzustellen, dass die Kopplung bzw. ein Koppelfaktor zwischen der Sendereinheit (bzw. der Senderwicklung) und der Empfängereinheit (bzw. der Empfängerwicklung) maximal ist. Beispielsweise kann eine solche Anpassung über eine Impedanz- und/oder Leistungsmessung der Sendereinheit bzw. Senderwicklung erfolgen. Entsprechend kann die Anpassungseinheit eine Impedanz-Messvorrichtung und/oder eine Leistungs-Messvorrichtung, welche insbesondere von dem Prozessor gesteuert wird, umfassen.

Ein weiterer unabhängiger Aspekt zur Lösung der Aufgabe betrifft ein Sendersystem für eine induktive Übertragung elektrischer Energie (insbesondere zur Verwendung in einem induktiven Energieübertragungssystem), umfassend:

- eine Sendereinheit mit einer mehrphasigen Senderwicklung, welche ausgelegt ist, eine stehende Welle eines für die induktive Energieübertragung genutzten Magnetfeldes zu erzeugen; und
- eine Anpassungseinheit, welche ausgelegt ist, die stehende Welle auf eine Position der Senderwicklung relativ zu einer Empfängerwicklung (des induktiven Energieübertragungssystems) anzupassen.

Insbesondere gelten die bezüglich des ersten Aspekts gemachten Ausführungen zur Sendereinheit und Anpassungseinheit auch für den oben genannten weiteren Aspekt. Wie bereits weiter oben erwähnt, ist eine Kommunikation mit der Empfängereinheit bzw. Empfängerwicklung zum Anpassen der stehenden Welle auf eine Relativposition der Senderwicklung und Empfängerwicklung nicht erforderlich. Das Ermitteln einer Kopplung zwischen der Sendereinheit und der Empfängereinheit kann ausschließlich auf der Sender- bzw. Primärseite (d.h. unabhängig von der Empfängereinheit des Energieübertragungssystems) erfolgen. Dies ist beispielsweise (allein) über das Impedanz- und/oder Leistungsverhalten der Sendereinheit bzw. Senderwicklung möglich. Eine explizite Kenntnis der Relativposition der Sender- und Empfängereinheit ist nicht erforderlich.

Ein weiterer unabhängiger Aspekt zur Lösung der Aufgabe betrifft ein Verfahren zum Herstellen (bzw. Bereitstellen) eines induktiven Energieübertragungssystems, umfassend die Schritte:

- Bereitstellen einer Sendereinheit zum Erzeugen eines für die Energieübertragung genutzten Magnetfelds; und
- Bereitstellen einer Empfängereinheit zum Erzeugen einer induzierten Spannung und/oder eines induzierten Stroms auf Basis des von der Sendereinheit erzeugten Magnetfelds;

wobei

eine Gesamtlänge und/oder zumindest ein Windungsdurchmesser einer Empfängerwicklung der Empfängereinheit auf eine Periodenlänge einer Grund- oder Oberwelle des von der Sendereinheit erzeugten Magnetfelds abgestimmt werden/wird.

Die Sendereinheit kann gemäß diesem Aspekt einphasig oder mehrphasig sein. Beispielsweise ist die Sendereinheit eine einphasige Sendereinheit mit einer Senderwicklung, welche mäanderförmig angeordnete bzw. aneinandergereihte Senderwindungen umfasst. Jeweils ein Windungsdurchmesser dieser Senderwindungen entspricht vorzugsweise im Wesentlichen der halben Periodenlänge einer zur Energieübertragung genutzten Magnetfeldwelle. Alternativ kann die Sendereinheit eine mehrphasige Senderwicklung umfassen. In diesem Fall entspricht eine Gesamtlänge der mehrphasigen Senderwicklung vorzugsweise im Wesentlichen einer Periodenlänge einer zur Energieübertragung genutzten Magnetfeldwelle. Die Gesamtlänge der Empfängerwicklung bezieht sich insbesondere auf eine Gesamtlänge entlang einer Längsachse der Empfängerwicklung bzw. der Empfängereinheit. Diese Längsachse der Empfängerwicklung ist in einem Betriebszustand des Energieübertragungssystems vorzugsweise im Wesentlichen senkrecht zu einer (vorgegebenen) Richtung des von der Sendereinheit erzeugten Magnetfelds ausgerichtet. Insbesondere wird die Periodenlänge einer Welle (Grund- oder Oberwelle) des für die Energieübertragung genutzten Magnetfelds von der bereitgestellten Sendereinheit vorbestimmt bzw. festgelegt.

In einer bevorzugten Ausführungsform wird die Gesamtlänge der Empfängerwicklung derart auf das von der Sendereinheit erzeugte Magnetfeld abgestimmt, dass die Gesamtlänge der Empfängerwicklung im Wesentlichen der Periodenlänge einer Grund- oder Oberwelle des von der Sendereinheit erzeugten Magnetfelds entspricht. Alternativ oder zusätzlich wird der zumindest eine Windungsdurchmesser der Empfängerwicklung derart auf das von der Sendereinheit erzeugte Magnetfeld abgestimmt, dass der zumindest eine Windungsdurchmesser der Empfängerwicklung im Wesentlichen der halben Periodenlänge einer Grund- oder Oberwelle des von der Sendereinheit erzeugten Magnetfelds entspricht. Beispielsweise kann der Windungsdurchmesser im Wesentlichen der halben Periodenlänge $\lambda/2$ der Grundwelle des zur Energieübertragung genutzten Magnetfelds entsprechen. Alternativ kann der Windungsdurchmesser im Wesentlichen der halben Periodenlänge $\lambda_2/2 = \lambda/4$ der zweiten Harmonischen, der halben Periodenlänge $\lambda_3/2 = \lambda/6$ der dritten Harmonischen, der halben Periodenlänge $\lambda_4/4 = \lambda/8$ der vierten Harmonischen, etc., des zur Energieübertragung genutzten Magnetfelds entsprechen. Im Rahmen der vorliegenden Erfindung hat sich herausgestellt, dass mit einer derartigen Dimensionierung der Empfängereinheit bzw. der Empfängerwicklung die magnetische Flussverkopplung zwischen Sender- und Empfängerseite erhöht bzw. maximiert werden kann.

Ein weiterer unabhängiger Aspekt zur Lösung der Aufgabe betrifft ein induktives Energieübertragungssystem, umfassend:

- eine Sendereinheit zum Erzeugen eines für die Energieübertragung genutzten Magnetfelds; und
- eine Empfängereinheit mit einer Empfängerwicklung;

wobei:

eine Gesamtlänge der Empfängerwicklung im Wesentlichen einer Periodenlänge einer Grund- oder Oberwelle des von der Sendereinheit erzeugten Magnetfelds entspricht, und/oder zumindest ein Windungsdurchmesser der Empfängerwicklung im Wesentlichen einer halben Periodenlänge einer Grund- oder Oberwelle des von der Sendereinheit erzeugten Magnetfelds entspricht.

In einer bevorzugten Ausführungsform umfasst die Sendereinheit eine Senderwicklung mit einer oder mehreren (insbesondere mäanderförmig angeordneten bzw. aneinandergereihten) Windungen, wobei jeweils ein Windungsdurchmesser der einen oder mehreren Windungen im Wesentlichen der halben Periodenlänge einer zur Energieübertragung genutzten Magnetfeldwelle entspricht. Vorzugsweise ist in dieser Ausführungsform die Empfängereinheit bzw. die Empfängerwicklung mehrphasig (insbesondere dreiphasig) ausgebildet. Vorzugsweise entspricht in dieser Ausführungsform die Gesamtlänge der Empfängerwicklung im Wesentlichen der Periodenlänge der zur Energieübertragung genutzten Magnetfeldwelle oder einer Periodenlänge einer Oberwelle des von der Sendereinheit erzeugten Magnetfelds.

Insbesondere ist eine Dimension bzw. eine Gesamtlänge der Senderwicklung auf eine Periodenlänge einer zur Energieübertragung genutzten Magnetfeldwelle abgestimmt. Mit anderen Worten ist die Senderwicklung (insbesondere eine Gesamtlänge der Senderwicklung) auf Basis einer (vorgegebenen) Periodenlänge einer zur Energieübertragung genutzten Magnetfeldwelle dimensioniert. Alternativ oder zusätzlich ist eine Dimension bzw. eine Gesamtlänge der Empfängerwicklung auf eine Periodenlänge einer Grund- oder Oberwelle des von der Sendereinheit erzeugten Magnetfelds abgestimmt. Mit anderen Worten ist die Empfängerwicklung (insbesondere eine Gesamtlänge der Empfängerwicklung) auf Basis einer (vorgegebenen) Periodenlänge einer Grund- oder Oberwelle des von der Sendereinheit erzeugten Magnetfelds dimensioniert.

Insbesondere umfasst die Sendereinheit eine Senderwicklung mit einer oder mehreren Windungen, wobei die eine oder mehreren Windungen der Senderwicklung jeweils einem Windungsdurchmesser, der im Wesentlichen einer halben Periodenlänge einer zur Energieübertragung genutzten Magnetfeldwelle entspricht, aufweisen.

Insbesondere können das erfindungsgemäße Verfahren zur induktiven Übertragung elektrischer Energie, das erfindungsgemäße Sendersystem und/oder das erfindungsgemäße induktive Energieübertragungssystem zum Laden eines Elektrofahrzeugs verwendet werden. Somit stellt die Erfindung gemäß einem weiteren Aspekt ein induktives Ladesystem für Elektrofahrzeuge, welches ein erfindungsgemäßes induktives Energieübertragungssystem umfasst, bereit.

Es versteht sich, dass die vorstehend genannten und die nachfolgend noch zu erläuternden Merkmale nicht nur in der jeweils angegebenen Kombination, sondern auch in Alleinstellung oder in anderen Kombinationen verwendbar sind, ohne den Rahmen der vorliegenden Erfindung zu verlassen. Für die oben genannten weiteren unabhängigen Aspekte und insbesondere für diesbezügliche bevorzugte Ausführungsformen gelten auch die vor- oder nachstehend gemachten Ausführungen zu den Ausführungsformen des ersten Aspekts. Insbesondere gelten für einen unabhängigen Aspekt der vorliegenden Erfindung und für diesbezügliche bevorzugte Ausführungsformen auch die vor- und nachstehend gemachten Ausführungen zu den Ausführungsformen der jeweils anderen unabhängigen Aspekte.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereitstellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden, um unnötige Wiederholungen zu vermeiden, bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen, sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann und daher in Erwägung gezogen und auch als von der Beschreibung umfasst angesehen werden soll.

Kurze Beschreibung der Zeichnungen

Figur 1a    zeigt eine schematische Zeichnung zum Prinzip der einphasigen induktiven Energieübertragung im Nahfeld;

Figur 1b    zeigt eine schematische Zeichnung zum Prinzip der mehrphasigen induktiven Energieübertragung im Nahfeld;

Figur 2a    zeigt eine schematische Zeichnung einer einphasigen zirkularen Wicklung;

Figur 2b    zeigt eine schematische Zeichnung einer einphasigen DD-Wicklung;

Figur 2c    zeigt eine schematische Zeichnung einer dreiphasigen verteilten Wicklung;

Figur 2d    zeigt eine schematische Zeichnung einer dreiphasigen konzentrierten Wicklung;

Figur 3    zeigt eine schematische Zeichnung eines ortsfesten zeitlich oszillierenden Magnetfelds, welches von einer einphasigen Primärseite erzeugt wird;

Figur 4    zeigt eine schematische Zeichnung einer Magnetfeld-Wanderwelle, welche von einer dreiphasigen Primärseite erzeugt wird;

Figur 5a    zeigt eine schematische Zeichnung, welche die Reduzierung des Koppelfaktors infolge einer Verschiebung bzw. Fehlpositionierung der Sekundärseite 20 bei einem einphasigen induktiven Energieübertragungssystems veranschaulicht;

Figur 5b    zeigt eine schematische Zeichnung, welche eine Maßnahme zur Reduzierung der Kopplungsänderung infolge einer Verschiebung bzw. Fehlpositionierung der Sekundärseite 20 auf Kosten des absoluten Koppelfaktors veranschaulicht;

Figur 6    zeigt eine schematische Zeichnung einer Wanderwelle in mehrphasigen induktiven Energieübertragungssystemen;

Figur 7a    zeigt eine schematische Zeichnung zum Prinzip der beweglichen stehenden Welle gemäß einer bevorzugten Ausführungsform der Erfindung mit einem an der Stelle $\theta = \lambda/2$ platzierten Raumzeiger;

Figur 7b    zeigt eine schematische Zeichnung zum Prinzip der beweglichen stehenden Welle gemäß einer bevorzugten Ausführungsform der Erfindung mit einem an der Stelle $\theta = 3\lambda/4$ platzierten Raumzeiger;

Figur 8a    zeigt eine schematische Zeichnung einer einphasigen DDD-Wicklung in einer perspektivischen Ansicht, dargestellt in der x-y-Ebene;

Figur 8b    zeigt eine schematische Zeichnung eines induktiven Energieübertragungssystems 100 mit einer dreiphasigen Primärseite 10 und einer einphasigen Sekundärseite 20 gemäß einem bevorzugten Ausführungsbeispiel der vorliegenden Erfindung, wobei die Primärseite 10 und die Sekundärseite 20 zentriert zueinander ausgerichtet sind;

Figur 8c    zeigt eine schematische Zeichnung des induktiven Energieübertragungssystems 100 von Figur 8b, wobei die Primärseite 10 und die Sekundärseite 20 zueinander verschoben sind;

Figur 9a    zeigt eine schematische Zeichnung einer einphasigen DDDD-Wicklung in einer perspektivischen Ansicht, dargestellt in der x-y-Ebene;

Figur 9b    zeigt eine schematische Zeichnung eines induktiven Energieübertragungssystems 100 mit einer dreiphasigen Primärseite 10 und einer einphasigen Sekundärseite 20 gemäß einem weiteren bevorzugten Ausführungsbeispiel der vorliegenden Erfindung, wobei die Primärseite 10 und die Sekundärseite 20 zentriert zueinander ausgerichtet sind;

Figur 9c    zeigt eine schematische Zeichnung des induktiven Energieübertragungssystems 100 von Figur 8b, wobei die Primärseite 10 und die Sekundärseite 20 zueinander verschoben sind;

Figur 10a    zeigt eine schematische Zeichnung einer einphasigen Primärseite in DDD-Wicklungsform und einer dreiphasigen Sekundärseite eines Energieübertragungssystems gemäß eines Ausführungsbeispiels der vorliegenden Erfindung;

Figur 10b    zeigt eine schematische Zeichnung einer einphasigen Primärseite in DDDD-Wicklungsform und einer dreiphasigen Sekundärseite eines Energieübertragungssystems gemäß eines Ausführungsbeispiels der vorliegenden Erfindung;

Figur 11a    zeigt eine schematische Zeichnung einer planaren Anordnung geometrisch verteilter Windungen und zugehörige exemplarische Grundwellen-Raumzeiger je Strangflussdichte für eine symmetrische dreiphasige Wicklung;

Figur 11b    zeigt eine schematische Zeichnung einer planaren Anordnung geometrisch verteilter Windungen und zugehörige exemplarische Grundwellen-Raumzeiger je Strangflussdichte für eine allgemeine mehrphasige Wicklung;

Figur 11c    zeigt eine schematische Zeichnung zur Raumzeigeraddition von geometrisch verteilten Strangflussdichten für ein symmetrisches dreiphasiges System;

Figur 11d    zeigt eine schematische Zeichnung zur Raumzeigeraddition von geometrisch verteilten Strangflussdichten für ein allgemeines mehrphasiges System;

Figur 12a    zeigt das Prinzip einer inversen Raumzeigerkomposition zur Bestimmung der Amplituden der Strangströme einer mehrphasigen Wicklung;

Figur 12b    zeigt ein Zeigerdiagramm zur Erläuterung einer "dq-Transformation";

Figur 13a    zeigt eine schematische Zeichnung eines vereinfachten exemplarischen primärseitigen Luftspalt-Magnetfelds mit ausgeprägten Oberwellen;

Figur 13b    zeigt eine schematische Zeichnung zur Auslegung der Sekundärseite unter Nutzung der Grundwelle gemäß eines Ausführungsbeispiels der Erfindung;

Figur 13c    zeigt eine schematische Zeichnung zur Auslegung der Sekundärseite unter Nutzung der dritten Harmonischen gemäß eines Ausführungsbeispiels der Erfindung.

<u>Detaillierte Beschreibung der Zeichnungen</u>

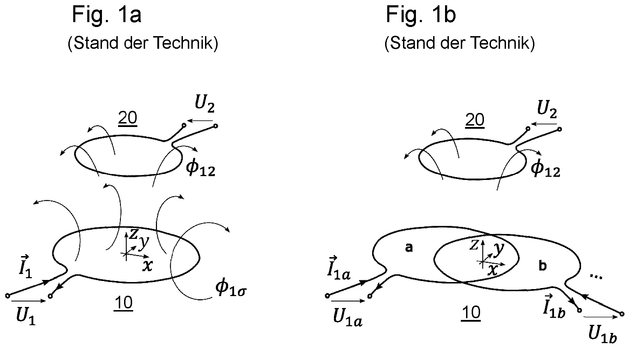

Die **Figur 1a** zeigt eine schematische Zeichnung zum grundlegenden Prinzip einer einphasigen induktiven Energieübertragung im Nahfeld. Dabei wird elektrische Energie von einer Sendereinheit 10 (Primärseite) auf eine Empfängereinheit 20 (Sekundärseite) kontaktlos mit Hilfe eines Magnetfelds übertragen. Sowohl die Sendereinheit 10 wie auch die Empfängereinheit 20 umfasst jeweils eine einzige Phase bzw. einen einzigen Strang. Infolge einer Spannung $U_1$, welche am Strang der Sendereinheit 10 anliegt, fließt ein Strom $I_1$ durch eine Senderwicklung der Primärseite. Infolge dieses Stroms $I_1$ wird ein magnetischer Fluss $\phi$ erzeugt, welcher eine Empfängerwicklung der Sekundärseite durchdringt. Dadurch entsteht am Strang der Empfängereinheit 20 eine induzierte Spannung $U_2$.

Die **Figur 1b** zeigt eine schematische Zeichnung zum grundlegenden Prinzip einer mehrphasigen induktiven Energieübertragung im Nahfeld. Im Vergleich zur einphasigen induktiven Energieübertragung umfasst die Sendereinheit 10 nicht nur eine, sondern mehrere Phasen bzw. Stränge. Dabei sind in Figur 1b die Stränge a und b explizit dargestellt. Eventuelle weitere Stränge sind durch die drei Punkte angedeutet. An jedem der vorhandenen Stränge wird eine Spannung angelegt und somit jeweils ein zugehöriger Strangstrom erzeugt. So wird am Strang a eine Spannung $U_{1a}$ angelegt, welche einen Strom $I_{1a}$ erzeugt, während am Strang b die Spannung $U_{1b}$ angelegt wird, welche einen Strom $I_{1b}$ erzeugt. Sämtliche Stränge der Primärseite tragen zum Erzeugen eines magnetischen Flusses $\phi$ bei, welcher die Empfängerwicklung der Sekundärseite durchdringt, so dass am Strang der Empfängereinheit 20 eine induzierte Spannung $U_2$ erzeugt wird.

Die induktive Kopplung zwischen der Sendereinheit 10 und der Empfängereinheit 20 durch den magnetischen Fluss $\phi$ ist abhängig von der relativen Positionierung der Sendereinheit 10 und der Empfängereinheit 20. Diese positionsabhängige Sensitivität der magnetischen Kopplung ist vor allem bei der einphasigen induktiven Energieübertragung, wie sie zumeist herkömmlich verwendet wird, ausgeprägt. Für eine hinreichend genaue Positionierung der Primärseite 10 und der Sekundärseite 20 sind daher gerade bei herkömmlichen einphasigen Energieübertragungssystemen in der Regel zusätzliche Assistenzsysteme notwendig. Die beiden Betriebskonzepte einphasig und dreiphasig werden nachfolgend noch etwas genauer vorgestellt. Das dreiphasige System steht dabei beispielhaft für alle mehrphasigen Systeme, die ein Drehfeld bzw. Wanderfeld zur Energieübertragung nutzen.

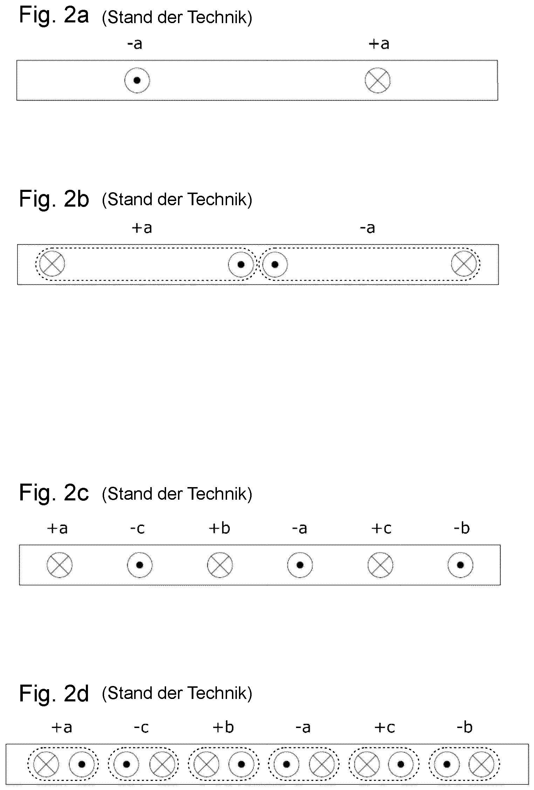

Die **Figuren 2a und 2b** zeigen schematisch vereinfachte beispielhafte einphasige Windungsarten im Schnittbild. Dabei ist in Figur 2a eine einphasige zirkulare Wicklung und in Figur 2b eine einphasige DD-Wicklung, jeweils mit einem einzelnen Strang a, dargestellt. Für den Strom $i_a(t)$ des Strangs a der einphasigen Wicklung gilt jeweils:

$$i_a(t) = \hat{\imath} \sin(\omega t) \qquad (5),$$

wobei $\hat{\imath}$ eine konstante Amplitude ist, wobei $\omega$ eine Frequenz bzw. Kreisfrequenz ist, und wobei t die Zeit ist.

Die **Figuren 2c und 2d** zeigen schematisch vereinfacht beispielhafte dreiphasige Windungsarten im Schnittbild. Dabei ist in Figur 2c eine dreiphasige verteilte Wicklung und in Figur 2d eine dreiphasige konzentrierte Wicklung, jeweils mit den Strängen a, b und c, dargestellt. Für den Strom $i_a(t)$ des Strangs a, den Strom $i_b(t)$ des Strangs b, und den Strom $i_c(t)$ des Strangs c der dreiphasigen Wicklung gilt jeweils:

$$i_a(t) = \hat{\imath}\sin(\omega t + 0) \qquad (6)$$

$$i_b(t) = \hat{\imath}\sin(\omega t + \tfrac{2\pi}{3}) \qquad (7)$$

$$i_c(t) = \hat{\imath}\sin(\omega t - \tfrac{2\pi}{3}) \qquad (8),$$

wobei $\hat{\imath}$ eine Amplitude bezeichnet, welche für sämtliche Strangströme $i_a(t)$, $i_b(t)$ und $i_c(t)$ identisch ist, wobei $\omega$ eine Frequenz bzw. Kreisfrequenz ist, und wobei $t$ die Zeit ist.

Auch wenn die resultierende B-Felder der gezeigten Wicklungsarten jeweils lokale Unterschiede aufweisen, werden im Folgenden zur Illustration der grundlegenden Prinzipien die beiden Wicklungsarten "zirkular - einphasig" und "verteilt - dreiphasig" herangezogen. Hinsichtlich der Feldharmonischen gelten die gezeigten Prinzipien analog für die übrigen einphasigen und dreiphasigen Windungsanordnungen.

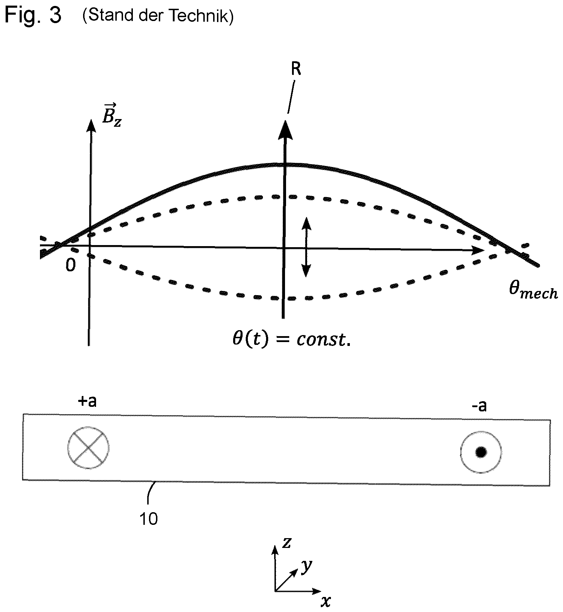

Die **Figur 3** zeigt eine schematische Zeichnung eines ortsfesten zeitlich oszillierenden Magnetfelds (B-Feld), welches von einer einphasigen Primärseite bzw. Sendereinheit 10 erzeugt wird. Das Magnetfeld ist in z-Richtung, d.h. orthogonal zu einer x-y-Ebene, in der sich die Sendereinheit 10 befindet, gerichtet. In der Figur 3 ist daher die magnetische Flussdichte $B_z$ in z-Richtung dargestellt. Die in Figur 3 dargestellte Koordinate $\theta_{mech}(t)$ bezeichnet eine Position bzw. einen Ort. Das Magnetfeld einphasiger Systeme steht örtlich fest und oszilliert zeitlich mit einer Anregungsfrequenz $\omega$ in dessen Amplitude (was in Figur 3 durch die gestrichelt dargestellte Welle und den vertikalen Doppelfeil angedeutet ist). Die Position $\theta(t)$ eines Raumzeigers R ist konstant bzw. ortsfest und oszilliert betragsmäßig. Die Lage des B-Felds ist somit durch die örtliche Platzierung von Leiterwindungen (Strang +a bzw. -a) der Sendereinheit 10 festgelegt.

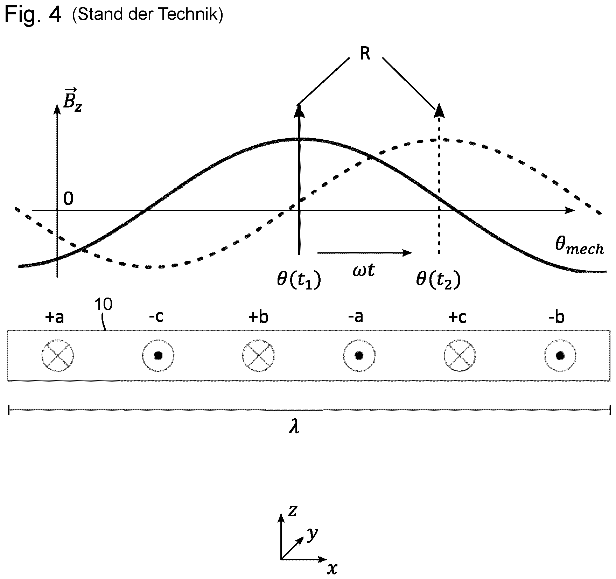

Die **Figur 4** zeigt eine schematische Zeichnung zum Prinzip der sogenannten Wanderwelle, welche herkömmlich bei der mehrphasigen induktiven Energieübertragung verwendet wird. Um das Prinzip der Wanderwelle zu zeigen, wird das B-Feld der in Figur 4 dargestellten Sendereinheit 10 zeitabhängig auf dessen Feldharmonische untersucht. Beispielhaft ist die Grundwelle für die beiden Zeitpunkte $t_1$ und $t_2$ dargestellt. Die Periodenlänge $\lambda$ entspricht der geometrischen Länge der Windungsanordnung bzw. Sendereinheit 10. Zur Energieübertragung auf eine gegenüberliegende Spule dient die z-Komponente $B_z$. Der Begriff Wanderwelle ergibt sich aus der Beobachtung, dass die Sinusform der Grundwelle mit der Zeit örtlich entlang $\theta_{mech}(t)$ wandert, wobei $\theta_{mech}$ eine Position bzw. einen Ort bezeichnet. Eine Wanderwelle, wie in der Figur dargestellt, basiert auf einem symmetrischen Drehstromsystem mit 120° elektrischer Phasenverschiebung und örtlich verschobener Anordnung der Phasen um $\pm\lambda/3$ der Periodenlänge $\lambda$. In der Figur 4 ist die magnetische Flussdichte $B_z$ der Grundwelle (erste Harmonische) des erzeugten B-Felds in z-Richtung über eine Periode $\lambda$ schematisch dargestellt. Jeweils am Maximum der beiden Kurven zum Zeitpunkt $t_1$ und $t_2$ ist der Raumzeiger R orientiert. Dieser bewegt sich von einer ersten Position $\theta(t_1)$ zu einer zweiten Position $\theta(t_2)$ mit $\omega t\lambda$. Somit resultieren Wanderwellen also aus Wechselströmen mit symmetrisch verschobener elektrischer und geometrischer Phase bei konstanter Amplitude. Bei dreiphasigen Systemen beträgt diese Phasenverschiebung +120°, wie auch aus den obigen Gleichungen (6) bis (8) hervorgeht.

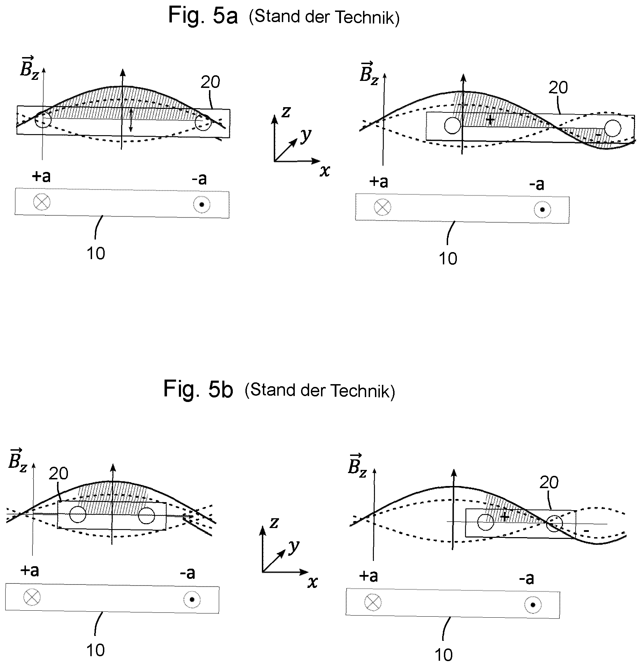

Die **Figur 5a** zeigt im linken und rechten Teilbild jeweils eine schematische Zeichnung einer Primärseite 10 und Sekundärseite 20 eines einphasigen induktiven Energieübertragungssystems. Dabei sind im linken Teilbild die Primärseite 10 und die Sekundärseite 20 zueinander zentriert ausgerichtet, während im rechten Teilbild die Sekundärseite 20 gegenüber der Primärseite 10 verschoben ist. Die im linken und rechten Teilbild dargestellte schraffierte Fläche stellt die magnetische Flussänderung in der Sekundärwicklung der Sekundärseite 20 dar. Wie aus einem Vergleich des linken Teilbilds mit dem rechten Teilbild der Figur 5a hervorgeht, wird die induktive Kopplung durch eine Verschiebung der Sekundärseite 20 relativ zur Primärseite 10 (wie im rechten Teilbild dargestellt) vermindert. Mit anderen Worten führt eine Verschiebung bzw. Fehlpositionierung der Übertragungswicklungen zu einer Reduzierung des Koppelfaktors. Wie bereits in Verbindung mit Figur 3 erwähnt, sind einphasige induktive Ladesysteme auf ein örtlich feststehendes (nur in der Intensität betragsmäßig veränderbares) B-Feld beschränkt. Aus diesem Kontext entsteht die Anforderung an die Genauigkeit der Ausrichtung von Primärseite 10 und Sekundärseite 20

Die **Figur 5b** zeigt ähnlich wie die Figur 5a im linken und rechten Teilbild jeweils eine schematische Zeichnung einer Primärseite 10 und Sekundärseite 20 eines einphasigen induktiven Energieübertragungssystems. Der Unterschied zur Figur 5a besteht darin, dass die Empfängereinheit bzw. Sekundärseite 20 verkleinert wurde. Dies stellt eine Maßnahme zur Reduzierung der Kopplungsänderung infolge einer Verschiebung bzw. Fehlpositionierung der Sekundärseite 20 auf Kosten des absoluten Koppelfaktors dar. Allgemein kann die Positioniertoleranz durch eine flächenmäßig unterschiedliche Dimensionierung von einer der beiden Ladeeinheiten (d.h. Primärseite 10 oder Sekundärseite 20) erhöht werden. Eine der beiden Einheiten bzw. Seiten wird flächenmäßig größer als die andere ausgelegt, wie es im Beispiel der Figur 5b dargestellt ist.

In den Figuren 5a und 5b zeigt die Flächenbilanz der jeweils rechten Teilbilder (welche jeweils eine gegenüber der Primärseite 10 verschobene Sekundärseite 20 zeigen) verglichen zu den jeweils linken Teilbildern (welche jeweils eine bezüglich der Primärseite 10 zentrisch ausgerichtete Sekundärseite 20 zeigen) eine Verbesserung von $k_{zentriert} \approx 3k_{verschoben}$ in Figur 5a zu $k_{zentriert} \approx 2k_{veschoben}$ in Figur 5b. Zwar kann die Positioniertoleranz dieser Systeme durch eine flächenmäßig unterschiedliche Dimensionierung von einer der beiden Übertragungseinheiten auf Kosten der absoluten Flussverkopplung erhöht werden, dennoch unterliegen diese einphasigen induktiven Energieübertragungssysteme einer ausgeprägten Sensitivität des Koppelfaktors gegenüber der relativen Ausrichtung von Primärseite 10 und Sekundärseite 20 (insbesondere von Primärwicklung und Sekundärwicklung). Ein entscheidender Nachteil von einphasigen induktiven Ladesystemen liegt somit in dem ortsfesten B-Feld, das zur Einhaltung eines zulässigen Koppelfaktors (wie eingangs beschrieben) ein Assistenzsystem bei der Positionierung erfordert. Assistenzsysteme zur Positionierung der Spulen tragen jedoch nicht zur Energieübertragung des Ladesystems bei und erhöhen somit die Kosten und Systemanfälligkeit.

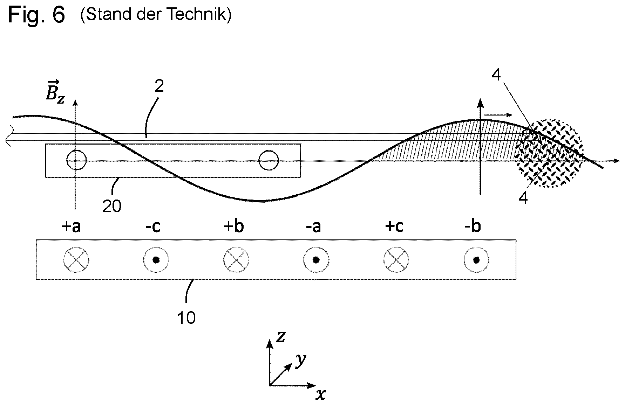

Die **Figur 6** zeigt eine schematische Zeichnung einer Wanderwelle in mehrphasigen induktiven Energieübertragungssystemen. Solche mehrphasigen Systeme mit Wanderwellen-Betrieb sind durch das bewegte B-Feld vorteilhafter hinsichtlich der Positioniertoleranz der Sekundärseite 20. Die Wanderwelle durchläuft kontinuierlich den gesamten Luftspalt über der Primärseite 10. Insbesondere bei einer verschobenen bzw. unausgerichteten Sekundärseite 20 kann dies dazu führen, dass die Flussänderung in einem Randbereich maximal wird und erhöhte Verluste, z.B. in einem Fahrzeugunterboden 2, auftreten. Ferner kann dies dazu führen, dass Grenzwerte hinsichtlich der zulässigen Flussdichte in einem Rand- bzw. Schwellerbereich 4 (z.B. eines Elektrofahrzeugs) überschritten werden. Die gesamte Umgebung der Primärseite 10 erfährt aufgrund der Wanderwelle die volle Amplitude der Flussänderung, was zu besagten Problemen führen kann. In der Figur 6 ist ein solches Szenario für eine relativ zur Primärseite 10 unausgerichtete Sekundärseite 20 beschrieben.

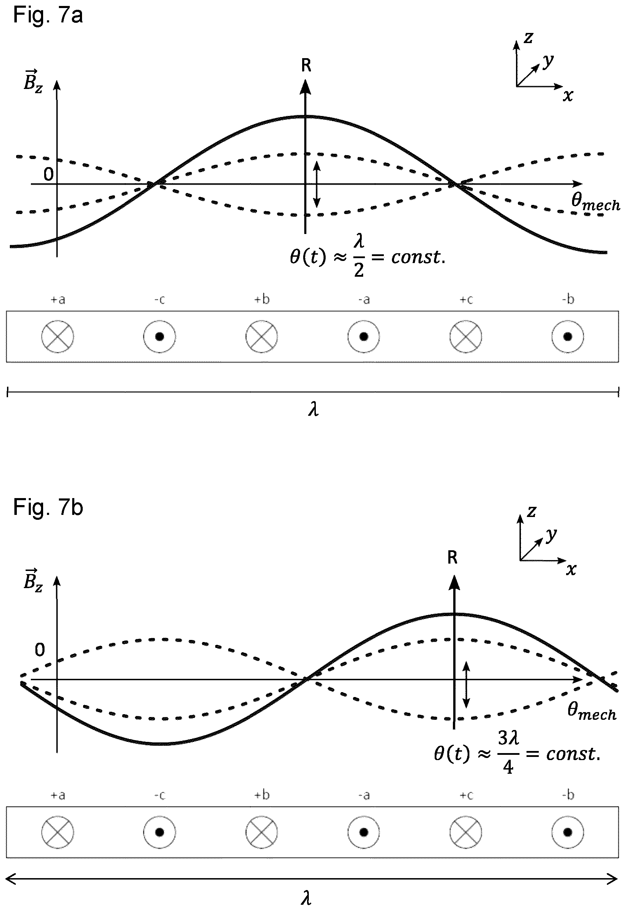

Im Rahmen der Erfindung hat sich herausgestellt, dass ein weitgehend konstanter Koppelfaktor zwischen den Wicklungen bzw. Spulen der Primär- und Sekundärseite für eine realistische Positioniergenauigkeit der Sekundärseite insbesondere durch eine mehrphasige Ausführung der Sendereinheit bzw. Primärseite 10 realisiert werden kann, wobei eine (bewegliche und/oder feldorientierbare) stehende Welle von der Sendereinheit 10 generiert und derart angeordnet wird, dass der magnetische Fluss durch die Empfängereinheit 20 für einen breiten Positionierbereich der Empfängereinheit 20 im Wesentlichen konstant ist. Dieser feldorientierte Ansatz erlaubt eine lokal veränderbare Formgebung des zur Energieübertragung genutzten Magnetfelds, indem der Raumzeiger der zu nutzenden Feldharmonischen auf die Empfängerposition ausgerichtet und in seiner Amplitude moduliert wird. Das Prinzip der beweglichen stehenden Welle ist in den Figuren 7a und 7b dargestellt.

Die **Figuren 7a und 7b** zeigen schematische Zeichnungen zum Prinzip einer beweglichen stehenden Welle gemäß einer bevorzugten Ausführungsform der vorliegenden Erfindung. Anhand der Position des Raumzeigers R, welcher in Figur 7a an der Stelle $\theta = \lambda/2$ und in Figur 7b an der Stelle $\theta = 3\lambda/4$ platziert ist, ist ersichtlich, dass die stehende Welle räumlich (entlang $\theta_{mech}$) verschoben werden kann. In Figur 7a sind die Knotenpunkte der Grundwelle über der Phase c platziert, während in Figur 7b die Knoten der stehenden Welle am Anfang, in der Mitte, und am Ende der Windungsanordnung liegen. Da es sich um eine stehende Welle handelt, sind die Positionen der Knoten der Welle grundsätzlich konstant. Eine Position des Raumzeigers R der stehenden Welle oszilliert in der Amplitude, steht aber örtlich fest, d.h. die Ortskoordinaten $\theta(t)$ der Knoten und/oder des Raumzeigers sind jeweils zeitlich konstant. Das Prinzip der "beweglichen" stehenden Welle ist nun aber, dass die stehende Welle räumlich (entlang $\theta_{mech}$) über eine Ansteuerung bzw. eine Modulation der Strangströme, die den jeweiligen Strängen der Senderwicklung 10 aufgeprägt sind, verschoben werden kann. Insbesondere ist die (örtliche) Position der Knotenpunkte und/oder des Raumzeigers der stehenden Welle über eine Ansteuerung bzw. Modulation der Strangströme einstellbar. Somit ist die erzeugte stehende Welle, anders als bei einer Wanderwelle, gezielt (über die Strangströme der Senderwicklung) verschiebbar und/oder ausrichtbar, so dass die erzeugte stehende Welle im Rahmen der vorliegenden Beschreibung auch als eine bewegliche bzw. verschiebbare bzw. ausrichtbare stehende Welle bezeichnet wird. Insbesondere ist die erzeugte stehende Magnetfeldwelle (bezüglich einer Position der Empfängereinheit bzw. Sekundärseite 20) einstellbar bzw. optimierbar. Das zur Energieübertragung erzeugte Magnetfeld (B-Feld) bzw. die zur Energieübertragung erzeugte stehende Magnetfeldwelle kann somit auf eine Position der Empfängereinheit 20 ausgerichtet werden. Das Optimieren bzw. Verschieben und/oder Ausrichten der stehenden Welle erfolgt insbesondere über eine Modulation der Amplituden der Strangströme, welche den jeweiligen Strängen der Senderwicklung aufgeprägt sind.

Zur Ausnutzung bzw. zum "Empfangen" dieses beweglichen Magnetfeldes der Primärseite 10 eignet sich auf der Sekundärseite 20 z.B. eine einphasige Empfänger- bzw. Sekundärseitenwicklung, welche eine Mehrzahl (z.B. zwei, drei, vier, fünf, sechs, usw.) von mäanderförmig (bzw. D-förmig) aneinandergereihten Windungen aufweist. Eine solche einphasige Wicklung wird wegen der mäanderförmig bzw. D-förmig aneinandergereihten Windungen im Rahmen dieser Beschreibung auch als mäanderförmige Wicklung bzw. D-Wicklung bezeichnet (unabhängig davon, wie viele D-förmige Windungen aneinandergereiht sind). Eine im Rahmen dieser Beschreibung bezeichnete mäanderförmige Wicklung bzw. D-Wicklung kann z.B. zwei, drei, vier, fünf, usw., mäanderförmig bzw. D-förmig aneinandergereihte Windungen umfassen. Um die D-Wicklung hinsichtlich der Anzahl von mäanderförmig aneinandergereihten Windungen genauer zu spezifizieren, wird z.B. bei zwei mäanderförmig aneinandergereihten Windungen von einer DD-Wicklung, bei drei mäanderförmig aneinandergereihten Windungen von einer DDD-Wicklung, bei vier mäanderförmig aneinandergereihten Windungen von einer DDDD-Wicklung, usw., gesprochen.

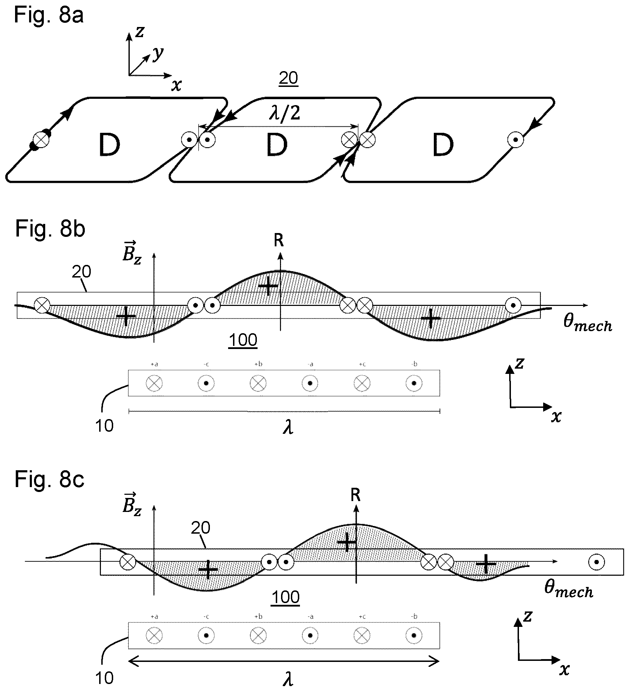

Die **Figur 8a** zeigt eine schematische Zeichnung einer einphasigen DDD-Wicklung in einer perspektivischen Ansicht, dargestellt in der x-y-Ebene (2D-Schnittebene). Wie bereits oben erwähnt, kann eine solche einphasige DDD-Wicklung beispielsweise auf der Sekundärseite eines induktiven Energieübertragungssystems angeordnet sein und in Kombination mit einer auf der Primärseite des Energieübertragungssystems erzeugten beweglichen stehenden Magnetfeldwelle verwendet werden.

Die **Figur 8b** zeigt eine schematische Zeichnung eines induktiven Energieübertragungssystems 100 mit einer dreiphasigen Sendereinheit bzw. Primärseite 10 und einer einphasigen Empfängereinheit bzw. Sekundärseite 20 gemäß einem bevorzugten Ausführungsbeispiel der vorliegenden Erfindung, wobei die Sendereinheit 10 und die Empfängereinheit 20 zentriert zueinander ausgerichtet sind. Die Sendereinheit 10 umfasst eine dreiphasige Senderwicklung, welche ausgelegt ist, eine stehende Welle eines für die induktive Energieübertragung genutzten Magnetfeldes zu erzeugen. Die Sendereinheit 10 weist eine Länge auf, die im Wesentlichen der Periodenlänge $\lambda$ einer Feldharmonischen (z.B. Grundwelle oder Oberwelle) des zur Energieübertragung genutzten Magnetfelds entspricht. Die Empfängereinheit bzw. Sekundärseite 20 umfasst die in Figur 8a gezeigte DDD-Wicklung, weshalb die Sekundärseite 20 in diesem Fall auch als DDD-Sekundärseite bezeichnet wird. Die von der dreiphasigen Sendereinheit bzw. Primärseite 10 erzeugte stehende Magnetfeldwelle wird bezüglich der Empfängereinheit bzw. Sekundärseite 20 derart ausgerichtet, dass alle Halbwellenanteile der stehenden Welle positiv zur Flussverkopplung beitragen. Vorzugsweise werden die D-Anteile der DDD-Sekundärwicklung (insbesondere die Windungsdurchmesser der Windungen der Empfängerwicklung) im Wesentlichen auf den Knotenabstand $\lambda/2$ der von der dreiphasigen Sendereinheit 10 erzeugten stehenden Magnetfeldwelle dimensioniert. Mit anderen Worten weist die Empfängerwicklung der Empfängereinheit 20 eine oder mehrere Windungen auf, welche jeweils einen Windungsdurchmesser aufweisen, der im Wesentlichen der halben Periodenlänge der Feldharmonischen des zur Energieübertragung genutzten Magnetfelds entspricht. Wie der Figur 8b zu entnehmen ist, tragen in dem gezeigten Beispiel alle Halbwellen der Feldharmonischen positiv zur induktiven Flussverkopplung bei. Dies ist in der Figur 8b durch die schraffierten und mit einem "+" versehenen Halbwellen angedeutet. Das erzeugte Magnetfeld wird auf diese Weise wesentlich stärker zur Energieübertragung ausgenutzt als bei den gängigen zirkularen Wicklungen oder DD-Wicklungen.

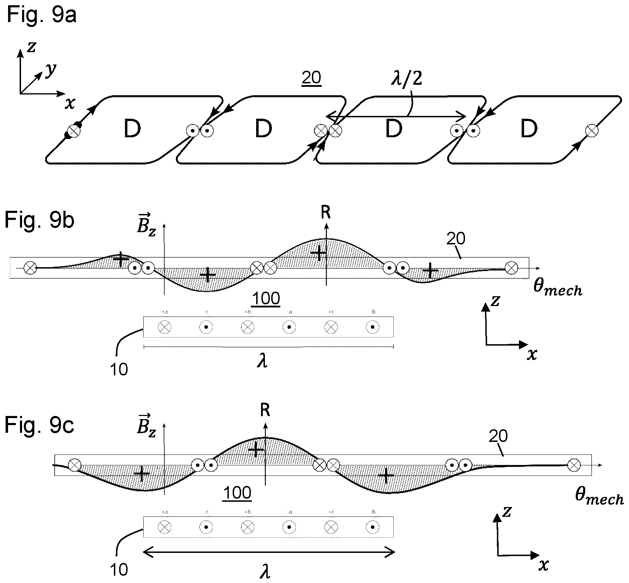

Die **Figur 8c** zeigt eine schematische Zeichnung des induktiven Energieübertragungssystems 100 von Figur 8b, wobei die Primärseite 10 und die Sekundärseite 20 nicht zentriert zueinander ausgerichtet sind, sondern in einer (maximal zulässigen) Fehlpositionierung zueinander versetzt sind. Die von der dreiphasigen Sendereinheit bzw. Primärseite 10 erzeugte stehende Magnetfeldwelle wird bezüglich der Empfängereinheit bzw. Sekundärseite 20 derart ausgerichtet, dass möglichst viele Halbwellenanteile der stehenden Welle positiv zur Flussverkopplung beitragen. Insbesondere wurden im Vergleich zu Figur 8b die Knotenpunkte der stehenden Magnetfeldwelle an die verschobene Empfängereinheit 20 angepasst. Diejenigen Halbwellenanteile, welche positiv zur Flussverkopplung beitragen, sind in der Figur 8c schraffiert dargestellt und mit einem "+" versehen. In der verschobenen Spulenanordnung der Figur 8c kann lediglich ein verbliebener Randbereich des Magnetfelds nicht genutzt werden, wodurch lediglich eine leichte Abweichung des Koppelfaktors im Vergleich zum ausgerichteten Zustand der Figur 8b zu erwarten ist. Um auch diesen Teil des Feldes auszunutzen, ist es vorteilhaft, die Sekundärseite 20 auf eine DDDD-Wicklung zu erweitern (siehe die Figuren 9a bis 9c).

Die **Figur 9a** zeigt eine schematische Zeichnung einer einphasigen DDDD-Wicklung in einer perspektivischen Ansicht, dargestellt in der x-y-Ebene (2D-Schnittebene). Wie bereits oben erwähnt, kann eine solche einphasige DDDD-Wicklung beispielsweise auf der Sekundärseite eines induktiven Energieübertragungssystems angeordnet sein und in Kombination mit einer auf der Primärseite des Energieübertragungssystems erzeugten beweglichen stehenden Magnetfeldwelle verwendet werden.

Die **Figur 9b** zeigt eine schematische Zeichnung eines induktiven Energieübertragungssystems 100 mit einer dreiphasigen Sendereinheit bzw. Primärseite 10 und einer einphasigen Empfängereinheit bzw. Sekundärseite 20 gemäß einem bevorzugten Ausführungsbeispiel der vorliegenden Erfindung, wobei die Sendereinheit 10 und die Empfängereinheit 20 zentriert zueinander ausgerichtet sind. Die Sendereinheit 10 umfasst eine dreiphasige Senderwicklung, welche ausgelegt ist, eine stehende Welle eines für die induktive Energieübertragung genutzten Magnetfeldes zu erzeugen. Die Sendereinheit 10 weist eine Länge auf, die im Wesentlichen der Periodenlänge $\lambda$ einer Feldharmonischen (z.B. Grundwelle oder Oberwelle) des zur Energieübertragung genutzten Magnetfelds entspricht. Die Empfängereinheit bzw. Sekundärseite 20 umfasst die in Figur 9a gezeigte DDDD-Wicklung, weshalb die Sekundärseite 20 in diesem Fall auch als DDDD-Sekundärseite bezeichnet wird. Die von der dreiphasigen Sendereinheit bzw. Primärseite 10 erzeugte stehende Magnetfeldwelle wird bezüglich der Empfängereinheit bzw. Sekundärseite 20 derart ausgerichtet, dass alle Halbwellenanteile der stehenden Welle positiv zur Flussverkopplung beitragen. Insbesondere wird die Lage des Raumzeigers R auf die DDDD-Empfängerwicklung angepasst. Vorzugsweise werden die D-Anteile der DDDD-Sekundärwicklung (insbesondere die Windungsdurchmesser der Windungen der Empfängerwicklung) im Wesentlichen (d.h. näherungsweise) auf den Knotenabstand $\lambda/2$ der von der dreiphasigen Sendereinheit 10 erzeugten stehenden Magnetfeldwelle dimensioniert. Mit anderen Worten weist die Empfängerwicklung der Empfängereinheit 20 eine oder mehrere Windungen auf, welche jeweils einen Windungsdurchmesser aufweisen, der im Wesentlichen der halben Periodenlänge der Feldharmonischen des zur Energieübertragung genutzten Magnetfelds entspricht. Wie der Figur 9b zu entnehmen ist, tragen in dem gezeigten Beispiel alle Halbwellen der Feldharmonischen positiv zur induktiven Flussverkopplung bei. Dies ist in der Figur 9b durch die schraffierten und mit einem "+" versehenen Halbwellen angedeutet. Das erzeugte Magnetfeld wird auf diese Weise wesentlich stärker zur Energieübertragung ausgenutzt als bei den gängigen zirkularen Wicklungen oder DD-Wicklungen.

Die **Figur 9c** zeigt eine schematische Zeichnung des induktiven Energieübertragungssystems 100 von Figur 9b, wobei die Primärseite 10 und die Sekundärseite 20 nicht zentriert zueinander ausgerichtet sind, sondern in einer (maximal zulässigen) Fehlpositionierung zueinander versetzt sind. Die von der dreiphasigen Sendereinheit bzw. Primärseite 10 erzeugte stehende Magnetfeldwelle wird bezüglich der Empfängereinheit bzw. Sekundärseite 20 derart ausgerichtet, dass möglichst viele Halbwellenanteile der stehenden Welle positiv zur Flussverkopplung beitragen. Insbesondere wird die Lage des Raumzeigers R auf die DDDD-Empfängerwicklung angepasst. Diejenigen Halbwellenanteile, welche positiv zur Flussverkopplung beitragen, sind in der Figur 8c schraffiert dargestellt und mit einem "+" versehen. Wie der Figur 9c entnommen werden kann, werden bei einer DDDD-Empfängerwicklung auch in der verschobenen Positionierung der Empfängereinheit 20 alle Feldanteile, insbesondere auch beide Randbereiche, zur induktiven Kopplung ausgenutzt.

Die Ausrichtung der von der dreiphasigen Sendereinheit 10 erzeugten stehenden Magnetfeldwelle bezüglich der Empfängereinheit 20 erfolgt mit Hilfe einer Anpassungseinheit, welche in den Figuren 8b, 8c, 9b und 9c jedoch nicht explizit gezeigt ist.

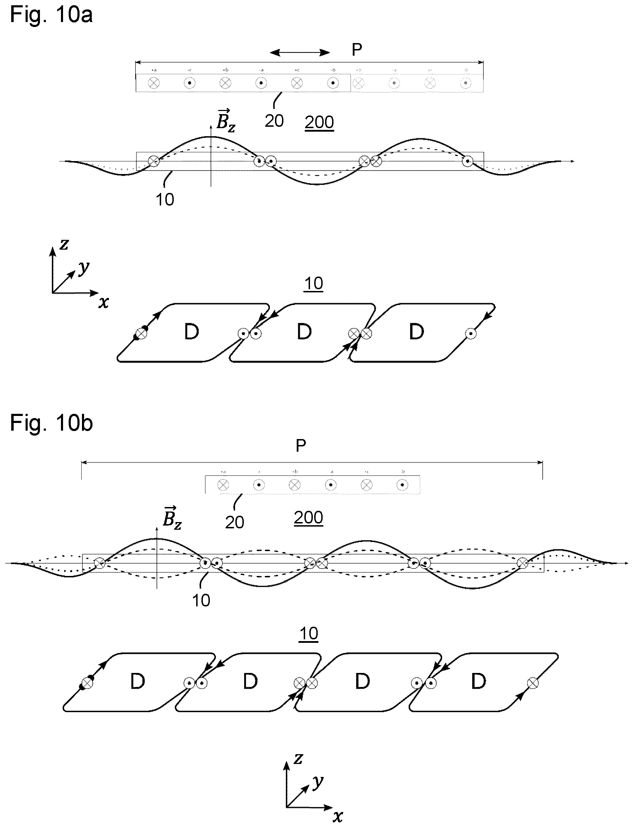

In den bisher gezeigten Beispielen wurde eine mehrphasige Wicklung auf der Primärseite eingesetzt. Tatsächlich ist jedoch auch der Betrieb mit einer einphasigen Primärseite und einer mehrphasigen Sekundärseite eine valide Lösung zur Aufgabe der vorliegenden Erfindung. Die Variante Primärseite einphasig und Sekundärseite mehrphasig ist in den **Figuren 10a und 10b** gezeigt und dadurch charakterisiert, dass auf der Primärseite 10 keine bewegliche stehende Welle, sondern ein ortsfestes B-Feld erzeugt wird. In dieser Konfiguration ist eine Spulenfläche der Sekundärseite 20 signifikant kleiner als die Spulenfläche der Primärseite 10, was vor allem in Automotive-Anwendungen erwünscht ist. Die induzierte Spannung auf der Sekundärseite 20 teilt sich positionsabhängig auf die Wicklungsstränge der mehrphasigen Sekundärseite auf. Die Erweiterung der Primärseite 10 um weitere D-Anteile kann den zulässigen Positionierbereich der Sekundärseite um jeweils eine Halbwelle $\lambda/2$ vergrößern. Insbesondere ist in der **Figur 10a** ein induktives Energieübertragungssystem 200 mit einer einphasigen Primärseite 10 umfassend eine DDD-Senderwicklung und einer dreiphasigen Sekundärseite 20 dargestellt. Im unteren Teilbild der Figur 10a ist die einphasige DDD-Senderwicklung der Primärseite 10 nochmal in einer perspektivischen Ansicht in der x-y-Ebene dargestellt. Die **Figur 10b** zeigt ein induktives Energieübertragungssystem 200 mit einer einphasigen Primärseite 10 umfassend eine DDDD-Senderwicklung und einer dreiphasigen Sekundärseite 20. Im unteren Teilbild der Figur 10b ist die einphasige DDDD-Senderwicklung der Primärseite 10 nochmal in einer perspektivischen Ansicht in der x-y-Ebene dargestellt. Ferner ist in den Figuren 10a und 10b jeweils ein zulässiger Positionierbereich P dargestellt, in welchem sich die Empfängereinheit 20 relativ zur Sendereinheit 10 befinden kann, ohne dass sich die induktive Kopplung signifikant verändert bzw. verringert. Eine Erweiterung der Senderwicklung von einer DDD- auf eine DDDD-Anordnung vergrößert den zulässigen Positionierbereich P um eine Halbwelle $D = \lambda/2$.

Das Vertauschen der Rollen Sender/Empfänger zeigt zudem das Potential des hierin beschriebenen Übertragungsprinzips für eine bidirektionale kontaktlose Energieübertragung. Dies trifft auch auf eine beidseitig mehrphasige Ausführung der Übertragungswicklungen zu. In Bezug auf die zuvor genannten Nachteile bisheriger mehrphasiger bzw. dreiphasiger Wanderwellen-Systeme sei an dieser Stelle betont, dass die Flussdichte im Randbereich des Spulensystems durch die Lage der Knotenpunkte der beweglichen stehenden Welle gezielt gesteuert und somit auf ein Minimum reduziert werden kann.

Die (bewegliche) stehende Magnetfeldwelle kann erzeugt werden, indem alle Strangströme der mehrphasigen Sendereinheit phasengleich eingestellt werden. Ferner kann die stehende Magnetfeldwelle ausgerichtet werden, indem die Amplituden der phasengleichen Strangströme auf die jeweilige Position der Empfängereinheit (z.B. auf eine Parkposition eines Elektrofahrzeugs, in dem die Empfängereinheit verbaut ist) angepasst werden. Auf diese Weise kann eine feldorientierte stehende Magnetfeldwelle erzeugt werden. Der resultierende stehende Raumzeiger des B-Felds ändert seine Amplitude mit der Frequenz der Strangströme. Bezüglich der Definition phasengleicher Strangströme wird auf die oben angegebenen Gleichungen (1) bis (4) verwiesen.

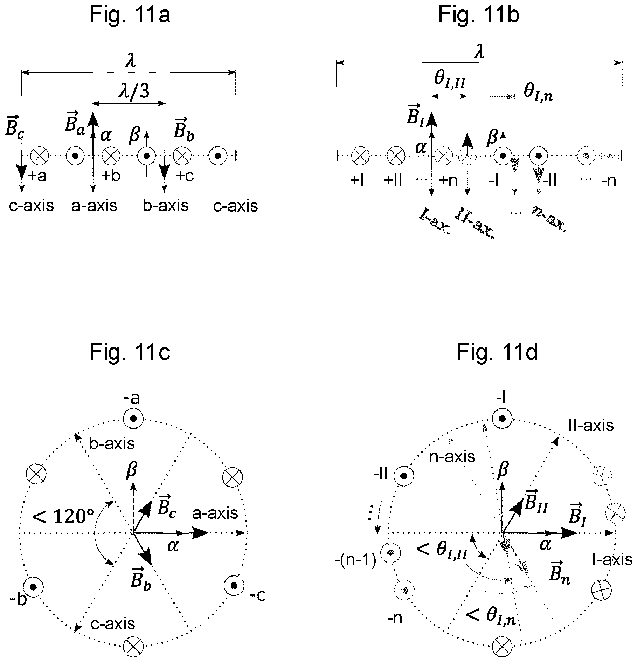

Die **Figur 11a** zeigt eine schematische Zeichnung einer planaren Anordnung geometrisch verteilter Windungen und zugehörige exemplarische Grundwellen-Raumzeiger je Strangflussdichte für eine symmetrische dreiphasige Wicklung. Und die **Figur 11b** zeigt eine schematische Zeichnung einer planaren Anordnung geometrisch verteilter Windungen und zugehörige exemplarische Grundwellen-Raumzeiger je Strangflussdichte für eine allgemeine mehrphasige Wicklung.

Aufgrund einer elektrischen Verschaltung in Stern, Dreieck oder Zickzack-Form gilt für die Modulation der Strangströme folgende Nebenbedingung:

$$\sum_{n=1}^{N} i_n(t) = 0, \text{ mit } N = max\ \mathcal{N}_{Phase} \qquad (9).$$

Für eine dreiphasige Wicklung gilt somit die folgende Nebenbedingung:

$$i_a(t) + i_b(t) + i_c(t) = 0 \qquad (10).$$

Die mehrphasigen Wicklungen können im Rahmen der Erfindung insbesondere translatorisch oder rotatorisch angeordnet sein. Zur besseren Veranschaulichung der Raumzeigerüberlagerung ("Space Vector Composition") ist das rotatorische Analogon sinnvoll, welches in den **Figuren 11c und 11d** dargestellt ist. Die **Figur 11c** zeigt eine schematische Zeichnung zur Raumzeigeraddition von geometrisch verteilten Strangflussdichten für ein symmetrisches dreiphasiges System. Und die **Figur 11d** zeigt eine schematische Zeichnung zur Raumzeigeraddition von geometrisch verteilten Strangflussdichten für ein allgemeines mehrphasiges System. Das allgemeine mehrphasige System muss nicht notwendigerweise geometrisch symmetrisch, d.h. gleichmäßig verteilt angeordnet sein. Eine unsymmetrische Leiteranordnung wirkt sich auf die Modulation der Strangströme aus.

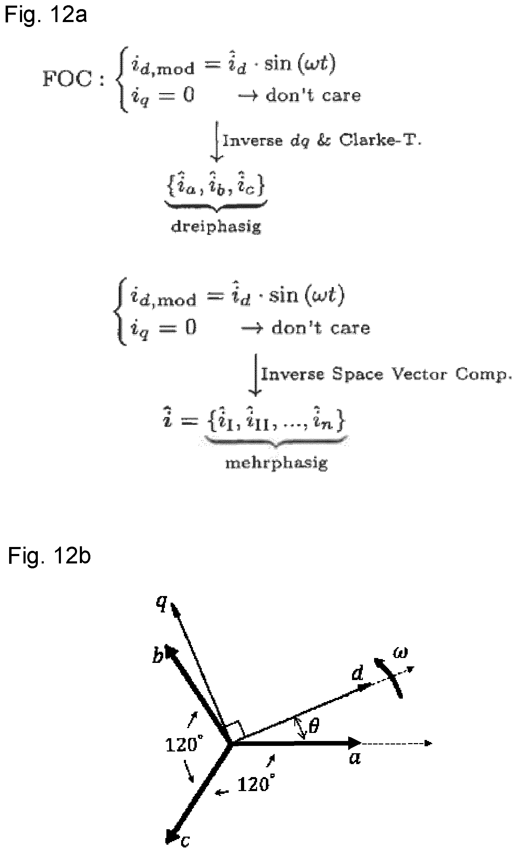

Allgemein gilt, dass die gezeigten planaren Anordnungen bei periodischer Kaskadierung äquivalent in die rotatorische Anordnung gemäß den Figuren 11c und 11d überführt werden können. Dabei wird unter dem Begriff "periodische Kaskadierung" eine periodische Wiederholung und/oder Fortführung und/oder Aneinanderreihung der Stränge zur Vergrößerung der Periodenzahl verstanden (z.B. könnte in Figur 4 die Anordnung der Stränge +a, -c, +b, -a, +c, -b periodisch fortgeführt werden zu: +a, -c, +b, -a, +c, -b, +a, -c, +b, etc.). Für die translatorische Anordnung mit Periodenzahl 1 (wie in den Figuren 11a und 11b) treten Randeffekte auf, die bei der geometrischen Auslegung einer Sekundärseite berücksichtigt werden können. Unter "Periodenzahl" wird im Rahmen der Beschreibung die Anzahl an Periodenlängen der Feldharmonischen, die zur Energieübertragung genutzt werden, verstanden. Die Amplituden der Strangströme nach Gleichung (1) können durch eine inverse Raumzeigerkomposition (d.h. allgemein durch eine Umkehr der dq-Größen in ein mehrphasiges System) bestimmt werden, wie sie in der **Figur 12a** skizziert ist. Dieses Vorgehen entspricht einer feldorientierten Modulation (FOC), wobei auf die d-Achse (empfängerorientiert) die gewünschte Stromform eingeprägt wird, die zur Energieübertragung genutzt werden soll. Die q-Achse trägt dazu nicht bei (idealisiert). Durch eine inverse Park-Transformation (dq & Clarke-T.) wird das empfängerorientierte Koordinatensystem auf die Primärseite transformiert. Die örtliche Lageabhängigkeit wird über die Positionierung der Sekundärseite (mittels der Ortsvariable $\theta_{mech}$) abgebildet.

Im Folgenden wird ein beispielhaftes Vorgehen beschrieben, um die Strangströme (insbesondere deren Amplituden) einer dreiphasigen Sendereinheit bzw. Senderspule auf die Ortsvariable $\theta_{mech}$ einzustellen: Der mathematische Hintergrund geht auf die Theorie zur Regelung von Drehfeldmaschinen mittels "feldorientierter Regelung (FOR)", "Vektorregelung" oder "field-oriented control (FOC)" zurück. Dabei dienen die Clarke- & Park-Transformation dazu, Größen eines dreiphasigen Systems auf ein einfacheres zweiachsiges Koordinatensystem zu überführen. Die Anwendung beider Transformationen wird häufig kurz als "dq-Transformation" bezeichnet und bildet die Stranggrößen (insbesondere Ströme, Spannungen, magn. Flüsse) auf die beiden orthogonalen Achsen "d" und "q" bzw. auf das sogenannte "dq-Koordinatensystem" ab.

Das in **Figur 12b** dargestellte Zeigerdiagramm zeigt die geometrisch um 120° (d.h. $\lambda/3$) verschobenen Stränge, sowie das um $\theta$ relativ zur a-Achse gedrehte dq-Koordinatensystem. Bei der dq-Transformation werden die Stranggrößen (z.B. Strangströme) vektoriell addiert. Der resultierende Vektor wird dann über eine Vektorzerlegung auf die d- bzw. q-Achse projiziert. Angewendet auf das hierin beschriebene induktive Energieübertragungssystem richtet sich die Lage des dq-Koordinatensystems nach der Position der Empfängereinheit bzw. Empfängerspule. Um aus dem dq-Koordinatensystem zurück auf die Stranggrößen bzw. Strangströme zu schließen, wird eine inverse dq-Transformation angewendet. Die allgemeine inverse dq-Transformation für ein (symmetrisches) dreiphasiges System lautet:

$$\begin{pmatrix} i_a \\ i_b \\ i_c \end{pmatrix} = \begin{pmatrix} \cos(\theta_{mech}) & -\sin(\theta_{mech}) \\ \cos(\theta_{mech} - \frac{2\pi}{3}) & -\sin(\theta_{mech} - \frac{2\pi}{3}) \\ \cos(\theta_{mech} - \frac{4\pi}{3}) & -\sin(\theta_{mech} - \frac{4\pi}{3}) \end{pmatrix} \begin{pmatrix} i_{d,mod} \\ i_q \end{pmatrix} \qquad (11).$$

Entsprechend Figur 12a wird der gewünschte Strom $i_{d,mod} = \hat{i}_d \cdot \sin(\omega t)$ auf die d-Achse moduliert und $i_q$ auf "0" gesetzt:

$$\begin{pmatrix} i_a(\theta_{mech}, t) \\ i_b(\theta_{mech}, t) \\ i_c(\theta_{mech}, t) \end{pmatrix} = \begin{pmatrix} \cos(\theta_{mech}) & -\sin(\theta_{mech}) \\ \cos(\theta_{mech} - \frac{2\pi}{3}) & -\sin(\theta_{mech} - \frac{2\pi}{3}) \\ \cos(\theta_{mech} - \frac{4\pi}{3}) & -\sin(\theta_{mech} - \frac{4\pi}{3}) \end{pmatrix} \begin{pmatrix} \hat{i}_d \cdot \sin(\omega t) \\ 0 \end{pmatrix} \quad (12).$$

Diese Gleichung lässt sich vereinfachen zu:

$$\begin{pmatrix} i_a(\theta_{mech}, t) \\ i_b(\theta_{mech}, t) \\ i_c(\theta_{mech}, t) \end{pmatrix} = \begin{pmatrix} \cos(\theta_{mech}) \\ \cos(\theta_{mech} - \frac{2\pi}{3}) \\ \cos(\theta_{mech} - \frac{4\pi}{3}) \end{pmatrix} \hat{i}_d \cdot \sin(\omega t) \quad (13).$$

Folglich sind die Strangströme durch die folgenden Gleichungen bestimmt:

$$\begin{cases} i_a(\theta_{mech}, t) = \hat{i}_d \cdot \cos(\theta_{mech}) \sin(\omega t) \\ i_b(\theta_{mech}, t) = \hat{i}_d \cdot \cos(\theta_{mech} - \frac{2\pi}{3})) \sin(\omega t) \\ i_c(\theta_{mech}, t) = \hat{i}_d \cdot \cos(\theta_{mech} - \frac{4\pi}{3})) \sin(\omega t) \end{cases} \quad (14).$$

Dabei geht die Position der Sekundärseite über den Winkel $\theta_{mech}$ in die Strangmodulation ein. Allgemein kann bei mehrphasigen Systemen mit $N \neq 3$ eine inverse Raumzeigerkomposition verwendet werden, um die dq-Größen in die entsprechenden Stranggrößen zurückzuführen.

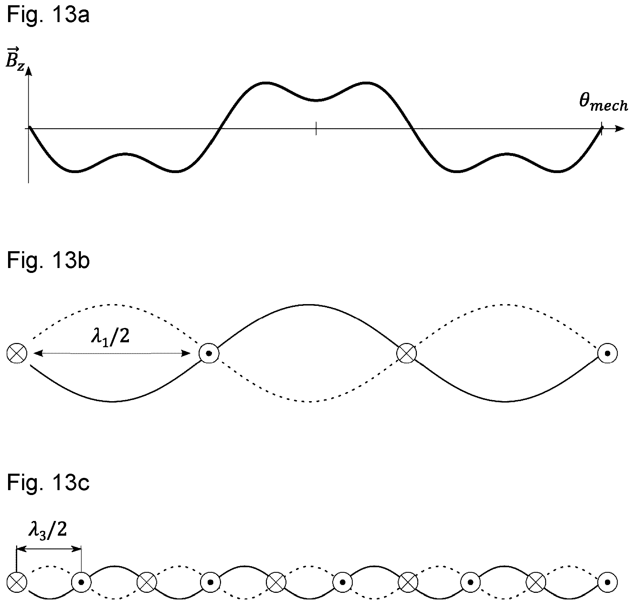

Die **Figur 13a** zeigt eine schematische Zeichnung eines vereinfachten exemplarischen primärseitigen Luftspalt-Magnetfelds mit ausgeprägten Oberwellen. Es hat sich im Rahmen der vorliegenden Erfindung herausgestellt, dass es vorteilhaft ist, die geometrischen Abmessungen der Sender- und/oder Empfängereinheit basierend auf der Periodenlänge der Grundwelle oder einer beliebige Feldharmonischen, die zur Energieübertragung genutzt werden soll, zu wählen. Die **Figur 13b** zeigt hierzu eine schematische Zeichnung zur Auslegung der Sekundärseite unter Nutzung der Grundwelle (erste Harmonische). Und die **Figur 13c** zeigt eine schematische Zeichnung zur Auslegung der Sekundärseite unter Nutzung einer Oberwelle (hier die dritte Harmonische). Insbesondere wird eine Länge der Sendereinheit und/oder eine Länge der Empfängereinheit im Wesentlichen der Periodenlänge einer Grund- oder Oberwelle eines zur Energieübertragung genutzten Magnetfelds entspricht. Insbesondere wird die Sekundärseite bzw. die Empfängereinheit derart ausgelegt, dass ein Windungsabstand der Empfängerwicklung im Wesentlichen der halben Periodenlänge einer Grund- oder Oberwelle des zur Energieübertragung genutzten Magnetfelds entspricht. Insbesondere werden die Windungen der Empfängerwicklung in Bezug auf die (bzw. auf Basis der) Knotenabstände des zur Energieübertagung genutzten Magnetfelds bzw. der zur Energieübertagung genutzten Magnetfeldharmonischen ausgelegt bzw. (geometrisch) dimensioniert.

Die vorliegende Erfindung bezieht sich insbesondere auf die Verbesserung induktiver Ladesysteme. Sie geht dabei über den herkömmlichen Ansatz der magnetischen Kopplung hinaus und integriert insbesondere den Einsatz von mehrphasiger induktiver Energieübertragung mittels feldorientierter stehender Wellen. Dieses Konzept dient dazu, die inhärenten Einschränkungen konventioneller Systeme zu adressieren, die in der Regel aus Energieverlusten und einer komplizierten geometrischen Ausrichtung der beteiligten Komponenten bestehen. In der herkömmlichen induktiven Energieübertragung werden meist einphasige Systeme verwendet. Die Einführung eines mehrphasigen Systems bedeutet, dass Energie über mehrere Phasen oder Schwingungen hinweg übertragen wird. Dies führt insbesondere dazu, dass die Energieübertragung effizienter wird und weniger anfällig für Interferenzen und Verluste ist. Bei dem hierin beschriebenen Konzept der feldorientierten stehenden Wellen können die elektromagnetischen Felder so ausgerichtet werden, dass sie in bestimmten Bereichen konzentriert sind, was als "stehende Wellen" bekannt ist. Diese Ausrichtung kann dazu beitragen, die Energie gezielter zu übertragen und Verluste durch Streuung oder Absorption zu minimieren. Die Sender- (Primärseite) und Empfängereinheit (Sekundärseite) können jeweils angepasst werden, um diese stehenden Wellen zu erzeugen und effizient zu nutzen. Insbesondere mit Hilfe eines intelligenten Energieübertragungsprotokolls ist es möglich, die Stranggrößen (wie z.B. Amplituden und Frequenzen) der übertragenen Energie dynamisch anzupassen. Das System kann mit integrierten Sensoren und Steuerungsmechanismen ausgestattet werden, die eine kontinuierliche Überwachung und Anpassung der Energieübertragungseffizienz ermöglichen. Dadurch können Benutzer in Echtzeit ein Feedback erhalten, und das System kann selbstlernende Algorithmen verwenden, um die Effizienz weiter zu optimieren. Im Vergleich zu herkömmlichen induktiven Ladesystemen bietet die Erfindung mehrere Vorteile: Die Energieübertragung ist effizienter, da insbesondere durch die feldorientierten stehenden Wellen weniger Energie verloren geht. Zudem kann die Notwendigkeit einer präzisen geometrischen Ausrichtung der Koppelelemente verringert werden, was die Benutzerfreundlichkeit erhöht. Schließlich kann die Verwendung eines mehrphasigen Systems die Gesamteffizienz und Zuverlässigkeit des Systems erhöhen. Es versteht sich, dass die Anwendung der vorliegenden Erfindung nicht auf Ladesysteme beschränkt ist. Beispielsweise kann die Erfindung auch in elektrischen Maschinen zur Rotorerregung eingesetzt werden kann.

**Bezugszeichenliste**

| | |
|---|---|
| 2 | Fahrzeugboden |
| 4 | Randbereich / Schwellerbereich |
| 10 | Sendereinheit (Primärseite) |
| 20 | Empfängereinheit (Sekundärseite) |
| 100 | Energieübertragungssystem |
| 200 | Energieübertragungssystem |
| R | Raumzeiger |
| P | Zulässiger Positionierbereich |

**Patentansprüche**

1. Verfahren zur induktiven Übertragung elektrischer Energie von einer Sendereinheit (10) auf eine Empfängereinheit (20) eines induktiven Energieübertragungssystems (100), umfassend:

   - Erzeugen einer stehenden Welle eines für die induktive Energieübertragung genutzten Magnetfeldes mittels einer mehrphasigen Senderwicklung der Sendereinheit (10), wobei die stehende Welle auf eine Relativposition der Senderwicklung und einer Empfängerwicklung der Empfängereinheit (20) angepasst wird.

2. Verfahren nach Anspruch 1,
   wobei die stehende Welle eine bewegliche stehende Welle ist; und/oder
   wobei eine Position der stehenden Welle einstellbar ist, nämlich insbesondere über eine Ansteuerung und/oder Modulation von Strangströmen, welche an der mehrphasigen Senderwicklung anliegen.

3. Verfahren nach Anspruch 1 oder 2, wobei zum Erzeugen der stehenden Welle jedem einer Mehrzahl von Strängen der mehrphasigen Senderwicklung ein jeweils zugehöriger Strangstrom aufgeprägt wird, wobei sämtliche Strangströme die gleiche elektrische Phase aufweisen.

4. Verfahren nach einem der vorangehenden Ansprüche, wobei die stehende Welle dadurch angepasst wird, dass Amplituden phasengleicher Strangströme, welche an der mehrphasigen Senderwicklung anliegen, angepasst werden.

5. Verfahren nach Anspruch 4, wobei die Amplituden der phasengleichen Strangströme derart angepasst werden, dass eine Kopplung zwischen der Sendereinheit (10) und der Empfängereinheit (20) maximal ist.

6. Verfahren nach einem der vorangehenden Ansprüche, umfassend den Schritt:

   - Bereitstellen des induktiven Energieübertragungssystems (100), wobei eine Gesamtlänge der mehrphasigen Senderwicklung des Energieübertragungssystems (100) und/oder eine Gesamtlänge der Empfängerwicklung des Energieübertragungssystems (100) im Wesentlichen einer Periodenlänge der zur Energieübertragung erzeugten stehenden Magnetfeldwelle entspricht.

7. Verfahren nach einem der vorangehenden Ansprüche, umfassend den Schritt:

   - Bereitstellen des induktiven Energieübertragungssystems (100), wobei die Empfängerwicklung eine oder mehrere Windungen mit jeweils einem Windungsdurchmesser, der im Wesentlichen der halben Periodenlänge einer Grund- oder Oberwelle des zur Energieübertragung genutzten Magnetfelds entspricht, aufweist.

8. Verfahren nach einem der vorangehenden Ansprüche, umfassend den Schritt:

- Bereitstellen des induktiven Energieübertragungssystems (100), wobei die Senderwicklung eine dreiphasige Wicklung ist, und wobei die Empfängerwicklung eine einphasige Wicklung, insbesondere eine DDD- oder DDDD-Wicklung, ist.

9. Induktives Energieübertragungssystem (100) umfassend:

- eine Sendereinheit (10) mit einer mehrphasigen Senderwicklung, welche ausgelegt ist, eine stehende Welle eines für die induktive Energieübertragung genutzten Magnetfeldes zu erzeugen;
- eine Empfängereinheit (20) mit einer einphasigen oder mehrphasigen Empfängerwicklung; und
- eine Anpassungseinheit, welche ausgelegt ist, die stehende Welle auf eine Relativposition der Senderwicklung und der Empfängerwicklung anzupassen.

10. Sendersystem für eine induktive Übertragung elektrischer Energie, umfassend:

- eine Sendereinheit (10) mit einer mehrphasigen Senderwicklung, welche ausgelegt ist, eine stehende Welle eines für die induktive Energieübertragung genutzten Magnetfeldes zu erzeugen; und
- eine Anpassungseinheit, welche ausgelegt ist, die stehende Welle auf eine Position der Senderwicklung relativ zu einer Empfängerwicklung anzupassen.

11. Verfahren zum Herstellen eines induktiven Energieübertragungssystems (100; 200), umfassend die Schritte:

- Bereitstellen einer Sendereinheit (10) zum Erzeugen eines für die Energieübertragung genutzten Magnetfelds; und
- Bereitstellen einer Empfängereinheit (20) zum Erzeugen einer induzierten Spannung und/oder eines induzierten Stroms auf Basis des von der Sendereinheit (10) erzeugten Magnetfelds;

**dadurch gekennzeichnet, dass**
eine Gesamtlänge und/oder zumindest ein Windungsdurchmesser einer Empfängerwicklung der Empfängereinheit (20) auf eine Periodenlänge einer Grund- oder Oberwelle des von der Sendereinheit (10) erzeugten Magnetfelds abgestimmt werden/wird.

12. Verfahren nach Anspruch 11, wobei

die Gesamtlänge der Empfängerwicklung derart auf das von der Sendereinheit (10) erzeugte Magnetfeld abgestimmt wird, dass die Gesamtlänge der Empfängerwicklung im Wesentlichen der Periodenlänge einer Grund- oder Oberwelle des von der Sendereinheit erzeugten Magnetfelds entspricht; und/oder der zumindest eine Windungsdurchmesser der Empfängerwicklung derart auf das von der Sendereinheit (10) erzeugte Magnetfeld abgestimmt wird, dass der zumindest eine Windungsdurchmesser der Empfängerwicklung im Wesentlichen der halben Periodenlänge einer Grund- oder Oberwelle des von der Sendereinheit erzeugten Magnetfelds entspricht.

13. Induktives Energieübertragungssystem (100; 200) umfassend:

- eine Sendereinheit (10) zum Erzeugen eines für die Energieübertragung genutzten Magnetfelds; und
- eine Empfängereinheit (20) mit einer Empfängerwicklung;

**dadurch gekennzeichnet, dass**:

eine Gesamtlänge der Empfängerwicklung im Wesentlichen einer Periodenlänge einer Grund- oder Oberwelle des von der Sendereinheit (10) erzeugten Magnetfelds entspricht; und/oder zumindest ein Windungsdurchmesser der Empfängerwicklung im Wesentlichen einer halben Periodenlänge einer Grund- oder Oberwelle des von der Sendereinheit (10) erzeugten Magnetfelds entspricht.

**14.** Induktives Energieübertragungssystem (200) nach Anspruch 13,
wobei die Sendereinheit (10) eine Senderwicklung mit einer oder mehreren Windungen umfasst, wobei jeweils ein Windungsdurchmesser der einen oder mehreren Windungen im Wesentlichen der halben Periodenlänge einer zur Energieübertragung genutzten Magnetfeldwelle entspricht.

**15.** Induktives Ladesystem für Elektrofahrzeuge umfassend ein Energieübertragungssystem (100; 200) nach einem der Ansprüche 9, 13 und 14.

## Fig. 1a
(Stand der Technik)

$U_2$

$\underline{20}$

$\phi_{12}$

$z$ $y$

$x$

$\vec{I}_1$

$\phi_{1\sigma}$

$\underline{10}$

$U_1$

## Fig. 1b
(Stand der Technik)

$U_2$

$\underline{20}$

$\phi_{12}$

a

$z$ $y$

$x$

b

$\vec{I}_{1a}$

$U_{1a}$

$\underline{10}$

$\vec{I}_{1b}$

...

$U_{1b}$

Fig. 2a (Stand der Technik)

-a                                    +a

Fig. 2b (Stand der Technik)

+a                                    -a

Fig. 2c (Stand der Technik)

+a        -c        +b        -a        +c        -b

Fig. 2d (Stand der Technik)

+a        -c        +b        -a        +c        -b

Fig. 3 (Stand der Technik)

$$\theta(t) = const.$$

Fig. 4 (Stand der Technik)

Fig. 5a  (Stand der Technik)

Fig. 5b  (Stand der Technik)

Fig. 6 (Stand der Technik)

Fig. 7a

$$\theta(t) \approx \frac{\lambda}{2} = const.$$

Fig. 7b

$$\theta(t) \approx \frac{3\lambda}{4} = const.$$

Fig. 8a

Fig. 8b

Fig. 8c

Fig. 9a

Fig. 9b

Fig. 9c

## Fig. 10a

## Fig. 10b

Fig. 11a

Fig. 11b

Fig. 11c

Fig. 11d

Fig. 12a

$$\text{FOC} : \begin{cases} i_{d,\text{mod}} = \hat{i}_d \cdot \sin(\omega t) \\ i_q = 0 \qquad \rightarrow \text{don't care} \end{cases}$$

$\downarrow$ Inverse $dq$ & Clarke-T.

$$\underbrace{\{\hat{i}_a, \hat{i}_b, \hat{i}_c\}}_{\text{dreiphasig}}$$

$$\begin{cases} i_{d,\text{mod}} = \hat{i}_d \cdot \sin(\omega t) \\ i_q = 0 \qquad \rightarrow \text{don't care} \end{cases}$$

$\downarrow$ Inverse Space Vector Comp.

$$\hat{i} = \underbrace{\{\hat{i}_\text{I}, \hat{i}_\text{II}, ..., \hat{i}_n\}}_{\text{mehrphasig}}$$

Fig. 12b

Fig. 13a

$\vec{B}_z$

$\theta_{mech}$

Fig. 13b

$\lambda_1/2$

Fig. 13c

$\lambda_3/2$

**EUROPÄISCHER RECHERCHENBERICHT**

Europäisches Patentamt
European Patent Office
Office européen des brevets

Nummer der Anmeldung

EP 25 15 5937

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/366132 A1 (COVIC GRANT ANTHONY [NZ] ET AL) 19. November 2020 (2020-11-19) | 1-5,8-10 | INV. B60L53/12 |
| Y | * Absätze [0004], [0005], [0047], [0048], [0065], [0190] * | 6,7, 11-15 | H01F38/14 H02J50/10 |
| | - - - - - | | H01Q3/30 |
| Y | WANG CHAO ET AL: "Design of Compact Three-Phase Receiver for Meander-Type Dynamic Wireless Power Transfer System", IEEE TRANSACTIONS ON POWER ELECTRONICS, INSTITUTE OF ELECTRICAL AND ELECTRONICS ENGINEERS, USA, Bd. 35, Nr. 7, 22. November 2019 (2019-11-22), Seiten 6854-6866, XP011779043, ISSN: 0885-8993, DOI: 10.1109/TPEL.2019.2955203 [gefunden am 2020-03-16] | 6,7, 11-15 | H01Q7/00 B60L53/126 B60L53/38 |
| A | * Seite 6855, Spalte 2 * | 1 | |
| | - - - - - | | |
| A | DE 198 56 937 A1 (MEINS JUERGEN [DE]) 21. Juni 2000 (2000-06-21) * Spalte 1, Zeile 10 - Zeile 20 * * Spalte 7, Zeile 38 - Zeile 46 * | 1-15 | **RECHERCHIERTE SACHGEBIETE (IPC)** |
| | - - - - - | | B60L |
| A | CN 114 312 378 A (HARBIN INST TECHNOLOGY) 12. April 2022 (2022-04-12) * Abbildungen 1-4 * | 1-15 | H02J H01F H01Q |
| | - - - - - | | |

Der vorliegende Recherchenbericht wurde für alle Patentansprüche erstellt

| Recherchenort | Abschlußdatum der Recherche | Prüfer |
|---|---|---|
| Den Haag | 1. Juli 2025 | Wirth, Sebastian |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 15 5937

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2025

| Im Recherchenbericht angeführtes Patentdokument | Datum der Veröffentlichung | Mitglied(er) der Patentfamilie | Datum der Veröffentlichung |
|---|---|---|---|
| US 2020366132 A1 | 19-11-2020 | CN 104380567 A | 25-02-2015 |
| | | CN 112046305 A | 08-12-2020 |
| | | EP 2815484 A1 | 24-12-2014 |
| | | JP 6608498 B2 | 20-11-2019 |
| | | JP 2015508940 A | 23-03-2015 |
| | | JP 2019009461 A | 17-01-2019 |
| | | KR 20140129172 A | 06-11-2014 |
| | | US 2015236513 A1 | 20-08-2015 |
| | | US 2020366132 A1 | 19-11-2020 |
| | | WO 2013122483 A1 | 22-08-2013 |
| DE 19856937 A1 | 21-06-2000 | AT E354197 T1 | 15-03-2007 |
| | | DE 19856937 A1 | 21-06-2000 |
| | | EP 1011187 A1 | 21-06-2000 |
| | | ES 2283091 T3 | 16-10-2007 |
| | | PT 1011187 E | 31-05-2007 |
| CN 114312378 A | 12-04-2022 | KEINE | |

Für nähere Einzelheiten zu diesem Anhang : siehe Amtsblatt des Europäischen Patentamts, Nr.12/82